# EUROPEAN PATENT SPECIFICATION

(11) **EP 3 344 515 B1**
(45) Date of publication and mention of the grant of the patent: **30.10.2019**
(21) Application number: 16756610.8
(22) Date of filing: 04.08.2016
(51) Int. Cl.: B62B 7/06

(54) **COLLAPSIBLE FRAME STRUCTURE**
FALTBARE RAHMENSTRUKTUR
STRUCTURE DE CHÂSSIS REPLIABLE

(30) Priority: 31.08.2015 IT UB20153308
(43) Date of publication of application: 11.07.2018
(73) Proprietor: Nest.ing Srl, 36077 Altavilla Vicentina (VI) (IT)
(72) Inventor: GORZA, Roberto, I-32034 Pedavena (BL) (IT); DAL MASO, Paolo, I-36071 Arzignano (VI) (IT); TOMASI, Ivan, I-36051 Creazzo (VI) (IT)
(74) Representative: De Bortoli, Eros
(86) International application number: PCT/EP2016/068677
(87) International publication number: WO 2017/036730

(56) References cited:
- DE-U1-202005 008 370
- US-A- 1 348 145
- US-A- 4 167 354
- US-A1- 2007 095 990

## Description

The present invention relates to a collapsible frame for vehicles (for example hand pushed vehicles such as strollers, baby carriages, trolleys, etc., or pedal driven vehicles, such as bicycles or the like), furnishing items (for example chairs, high chairs, deck chairs, sun beds, etc.) and the like.

The use of foldable frames is known in the production of vehicles (for example hand pushed vehicles) or furnishing items.

Some frames of known type, such as the one described in the Italian patent application VR2011A000226, comprise a structure provided with a plurality of tubular elements hinged and mutually movable with respect to one another at appropriate articulation axes so that the aforesaid structure can pass from an extended open condition to a collapsed closed condition, and vice versa.

In foldable frames of this type, (widely used, for example, to produce baby carriages, strollers and the like), the arrangement of a plurality of articulation points between the tubular elements requires these latter to have a sufficiently large cross section and thickness, so as to ensure sufficient mechanical resistance of the hinge points.

However, these construction limits prevent a significant reduction in the weight and overall dimensions of the frame.

Other frames of known type, such as the one described in the US patent application US2007/095990, comprise a structure provided with a plurality of tubular elements linked by internal linking cables and mutually couplable/decouplable so that the aforesaid structure can take an extended open condition and a collapsed closed position.

Although frames of this type, currently available, offer the possibility of obtaining significant lightening of the structure with respect to more conventional solutions, they have some drawbacks.

In many cases, they are relatively complex and costly to produce on an industrial scale and do not guarantee sufficient structural solidity when in the open condition.

Moreover, passage from the open condition to the closed condition, and vice versa, often requires the user to carry out relatively complex maneuvers.

The main aim of the present invention is to provide a collapsible frame that allows the aforesaid drawbacks to be overcome.

Within this aim, one of the objects of the present invention is to produce a collapsible frame that has a particularly sturdy, simple, light and compact structure.

Another object of the present invention is to produce a collapsible frame that is practical and easy to use, even by inexperienced users.

One more object of the present invention is to produce a collapsible frame that is relatively simple to produce on an industrial scale, at competitive costs.

This aim and these objects, together with other objects that will be more apparent from the subsequent description and from the accompanying drawings, are achieved, according to the invention, by a foldable frame according to claim 1, proposed hereunder, and to the subsequent dependent claims.

Further advantages of the foldable frame according to the present invention will become apparent with reference to the description given below and to the accompanying figures, provided purely for non-limiting illustrative purposes, wherein:
- Figs. 1-8 schematically illustrate some views of an embodiment of the collapsible frame according to the invention;
- Figs. 9-17 schematically illustrate some views of a further embodiment of the collapsible frame according to the invention;
- Figs. 18-24 schematically illustrate some views of a further embodiment of the collapsible frame according to the invention;
- Figs. 25-30 schematically illustrate some views of a further embodiment of the collapsible frame according to the invention.

With reference to the aforesaid figures, the present invention relates to a foldable frame 1. Below, the frame 1 will be described with reference to its use to produce strollers, baby carriages and the like.

However, this is not intended to in any way limit the scope of the present invention.

The frame 1 can in fact be used to produce a variety of products of different type, for example trolleys, bicycles, high chairs, chairs, deck chairs, tables and the like.

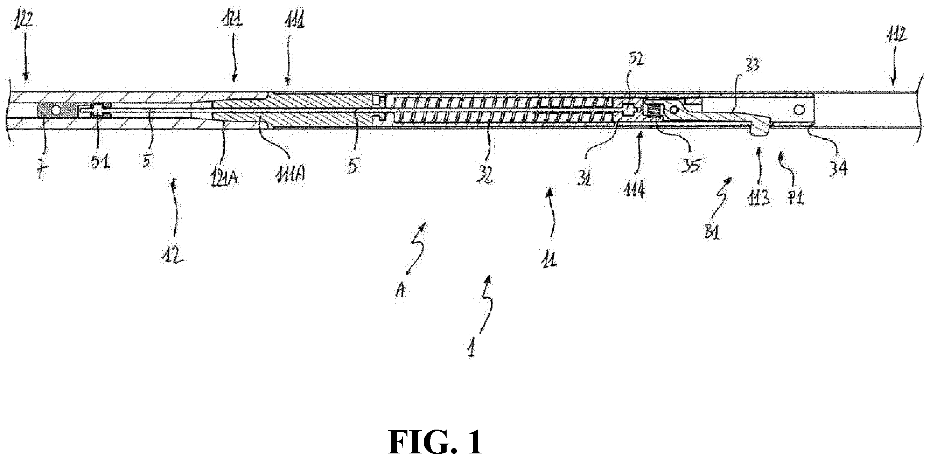

Figs. 1-8 relate to a possible embodiment of the frame 1.

The frame 1 comprises at least a first and second tubular element 11, 12 operatively couplable to one another.

The tubular elements 11, 12 are linked respectively to first and second portions of frame 1A, 1B.

The tubular elements 11, 12 and the portions of frame 1A, 1B can be any structural elements of the frame 1.

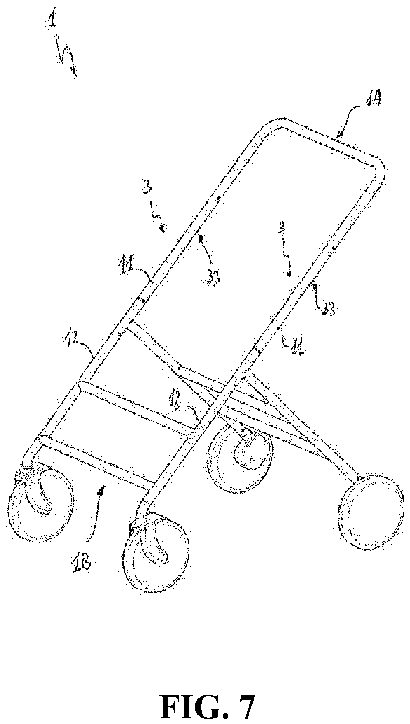

For example, in a stroller or trolley (Figs. 7-8), the tubular element 11 and the portion of frame 1A can be respectively a top upright and the "handlebar" of the vehicle while the tubular element 12 and the portion of frame 1B can be respectively a bottom upright and a linking framework with the wheels of the vehicle.

The tubular elements 11, 12 have an at least partially hollow section, for example of circular, ellipsoidal or polygonal shape.

The tubular elements 11, 12 can be rectilinear or have more complex shapes (for example curved, T-shaped, U-shaped or the like).

The tubular elements 11, 12 respectively comprise first and second ends 111, 112, opposite one another, and third and fourth ends 121, 122, opposite one another.

The tubular elements 11, 12 are mutually couplable respectively at their first and third ends 111, 121.

Preferably, when they are mutually coupled, the tubular elements 11, 12 are aligned along a longitudinal axis perpendicular to the coupling section.

Preferably, in the embodiment illustrated in Figs. 1-8, the frame 1 comprises first coupling means to couple the aforesaid tubular elements to one another.

Preferably, in the embodiment illustrated in Figs. 1-8, the aforesaid first coupling means comprise first and second coupling connectors 111A, 121A that are part of, or are arranged internally to, the tubular elements 11, 12. The connectors 111A, 121A are positioned at the first and third ends 111, 121 of the tubular elements 11, 12, respectively.

Preferably, the connectors 111A, 121A are shaped so as to be mutually couplable by means of shape coupling.

As illustrated in the aforesaid figures, the connector 111A can be a male connector projecting from the end 111 of the tubular element 11, while the connector 121A can be a shaped seat or a female connector in proximity of the end 121 of the tubular element 12.

Other solutions for producing the connectors 111A, 121A are possible.

For example, the connector 111A could be a shaped seat or a female connector while the connector 121A could be a male connector.

According to alternative embodiments of the present invention, the aforesaid first coupling means could comprise a coupling kinematic chain internally to the tubular elements 11, 12 and comprising a plurality of segments articulated to one another at least at an articulation axis.

A first segment of the kinematic chain could be fixed to the tubular element 11 while a second segment could slidingly coupled with the tubular element 12.

The frame 1 comprises a linking element 5 adapted to maintain the tubular elements 11, 12 mutually linked.

The linking element 5 has an elongated shape and comprises fifth and sixth ends 51, 52, opposite one another.

The linking element 5 is foldable and substantially inextensible in length, except for the normal mechanical tolerances.

Preferably, the linking element 5 is arranged so as to pass internally to the tubular elements 11, 12.

According to embodiments of the invention (not illustrated), the linking element 5 could however pass, at least partially, externally to the tubular elements 11, 12.

The end 51 of the linking element 5 is fixed to a first fixed link element 7.

In the embodiment of Figs. 1-8, the first fixed link element 7 (for example consisting of a mechanical stop block) is preferably fixed to the tubular element 12 or to the portion of frame 1B linked to this latter.

As will be more apparent below, the end 52 of the linking element 5 is instead fixed to a moving element 31 positioned internally to the tubular element 11.

Preferably, the linking element 5 is a linking cable that is flexible and inextensible. This linking cable can be made, for example, of steel or Dyneema™.

The linking element 5 can also be of different type, for example a chain or an articulated linking element so as to be foldable.

Preferably, the connectors 111A, 121A, described above, are shaped so as to allow passage of the linking element 5.

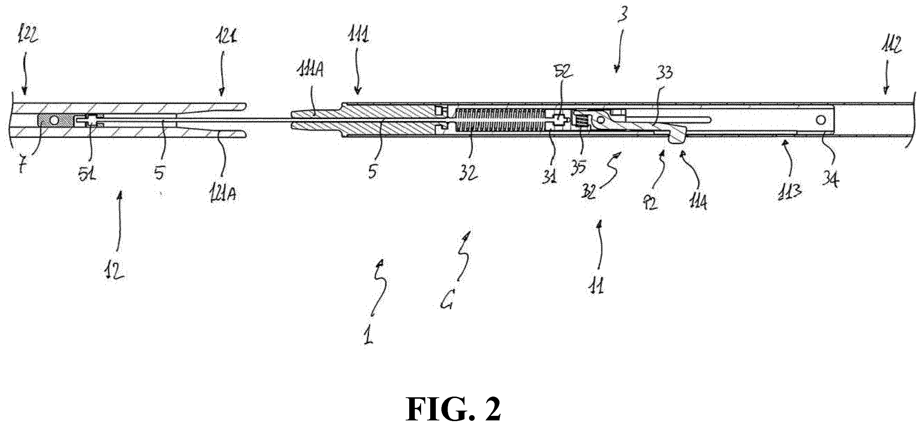

Although linked by the linking element 5, the tubular elements 11, 12 are movable from an assembled state A (Fig. 1), at which they are rigidly coupled to one another, at the respective ends 111, 121, to a collapsed state C (Figs. 2-3), at which they are foldable with respect to one another at the respective ends 111, 121, or vice versa.

The frame 1 comprises a blocking mechanism 3.

The blocking mechanism 3 comprises a supporting base 31 positioned internally to the tubular element 11 and slidingly movable along this latter.

The linking element 5 has the respective sixth end 52 fixed to the supporting base 31.

The supporting base 31 thus forms the moving element to which the linking element 5 is linked, as mentioned above.

The blocking mechanism 3 comprises a first elastic element 32 positioned internally to the tubular element 11 and operatively coupled to the supporting base 31 and to a second fixed link element 34.

Preferably, the second fixed link element 34 is integrally connected to the tubular element 11. Alternatively, it could be fixed to the portion of frame 1A linked to this latter.

Preferably, the elastic element 32 and the supporting base 31 are respectively in proximal and distal position with respect to the end 111 of the tubular element 11.

Preferably, the elastic element 32 is arranged coaxially with the linking element 5. Preferably, the elastic element 32 comprises a spring which can be of known type.

The blocking mechanism 3 comprises a blocking element 33 positioned internally to the tubular element 11.

The blocking element 33 is operatively linked to the supporting base 31 so as to be slidingly movable along the tubular element 11, together with the supporting base 31 and so as to be movable with respect to the supporting base 31 to engage with or disengage from the tubular element 11.

Preferably, the supporting base 31 and the blocking element 33 are respectively in proximal and distal position with respect to the end 111 of the tubular element 11.

Preferably, the blocking element 33 is free to engage with the tubular element 11, when it is in predefined engaging positions P1, P2 along the tubular element 11.

Preferably, the blocking element 33 is disengaged from the tubular element 11 as a result of an exerted external force (for example by the user).

Preferably, the blocking mechanism 3 comprises a second elastic element 35 operatively coupled to the blocking element 33 and to the supporting base 31.

Preferably, the blocking element 33 (when in the engaging positions P1, P2) engages with the tubular element 11 as a result of a force exerted by the elastic element 35.

Preferably, the elastic element 35 is in a discharged condition (corresponding to the natural rest condition or to a precharged assembly condition), when the blocking element 33 is engaged with the tubular element 11.

Preferably, the elastic element 35 is in a charged condition (in which it stores a greater amount of elastic energy with respect to the aforesaid discharged condition), when the blocking element is disengaged from the tubular element 11.

Preferably, the elastic element 35 is deformed accumulating elastic energy, when the blocking element 33 disengages from the tubular element 11 as a result of an exerted external force. Preferably, the elastic element 35 is deformed releasing elastic energy to move the blocking element 33 with respect to the supporting base 31 and engage it with the tubular element 11, when the blocking element 33 is in the engaged positions P1, P2.

Preferably, the elastic element 35 comprises a spring that can be of known type.

Preferably, the blocking element 3 comprises a blocking ratchet 33 operatively linked to the supporting base 31.

Preferably, the blocking ratchet 33 is rotatably movable with respect to the supporting base 31 to engage with or disengage from the tubular element 11.

Preferably, the blocking ratchet 33 is rotatably linked to the supporting base 31 at an articulation axis 334.

Preferably, the articulation axis 334 (advantageously perpendicular to the tubular element 11) is oriented so as to allow the blocking ratchet 33 to rotate with respect to the supporting base 31 and to move integrally with this latter along the tubular element 11.

Preferably, first and second portions 331, 332 of the blocking ratchet 33 are arranged in opposite positions with respect to the articulation axis 334 in order to be able to interact with the tubular element 11 and the supporting base 31, respectively.

Preferably, the second elastic element 35 is operatively coupled to the second portion 332 of the blocking ratchet 33 and to the supporting base 31.

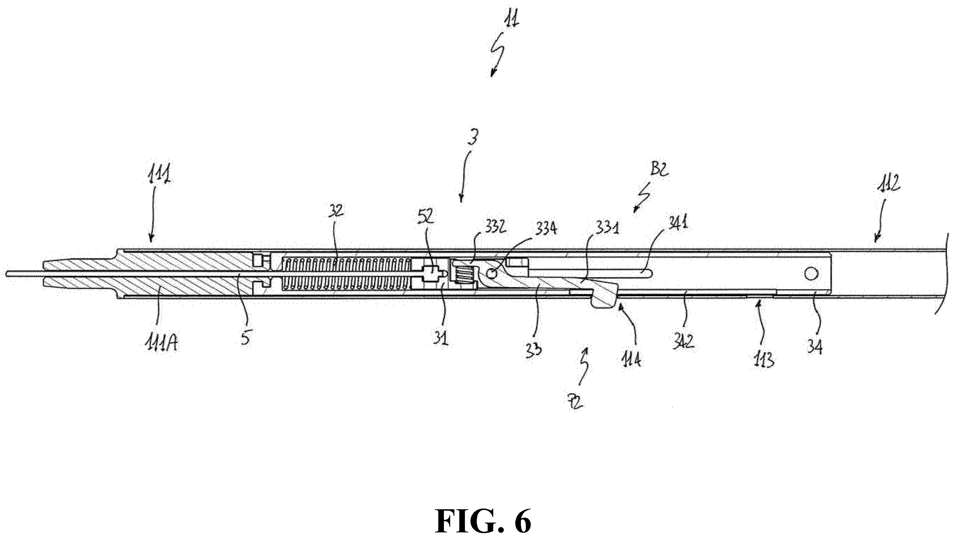

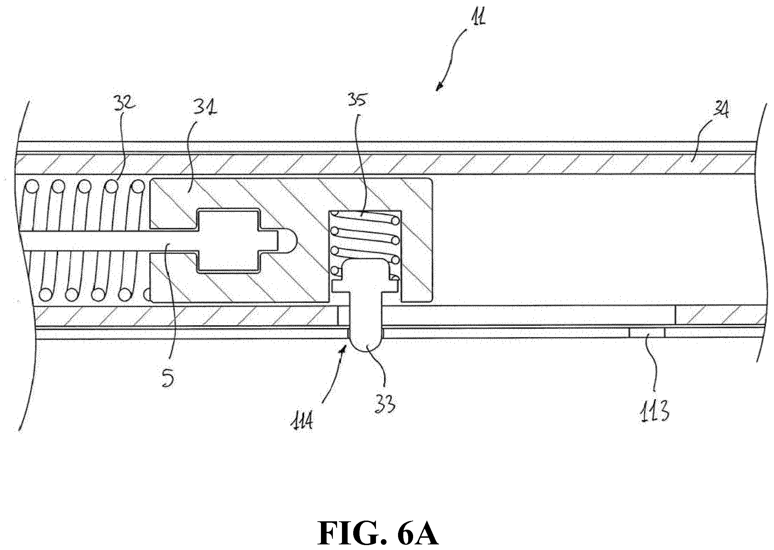

According to alternative embodiments (Fig. 6A), the blocking element 33 could comprise a blocking set screw or pin operatively linked to the supporting base 31 so as to be movable (with translatory motion) with respect to this latter.

In this case, the elastic element 35 could be operatively coupled to an end of the aforesaid blocking set screw or pin and to the supporting base 31.

Preferably, the blocking mechanism 3 comprises a shaped casing 34 positioned internally to the tubular element 11 so as to be coaxial with this latter.

Preferably, the shaped casing 34 is integrally connected to the tubular element 11.

Preferably, the shaped casing 34 is a cylindrical or polyhedral body having a hollow section (advantageously with a shape complementary to the shape of the tubular element 11). Preferably, the linking element 5 is arranged so as to pass internally to the shaped casing 34. Preferably, the supporting base 31 and the blocking element 33 are positioned internally to the shaped casing 34 and are slidingly movable along this latter.

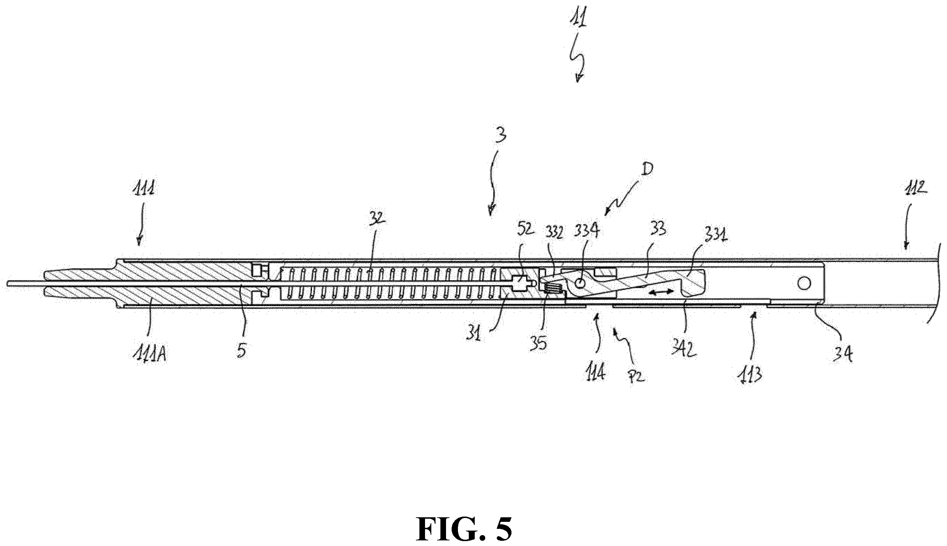

To this end, the shaped casing 34 can be provided with a first and second longitudinal sliding slot 341, 342 (Figs. 5-6) that advantageously act as guides respectively for the supporting base 31 and for the blocking element 33.

The elastic element 35 is also preferably positioned internally to the shaped casing 34. Preferably, the elastic element 32 is positioned internally to the shaped casing 34 and is operatively coupled to the supporting base 31 and to the shaped casing 34.

The shaped casing 34 thus forms a second fixed link element, integrally connected to the tubular element 11, to which the first elastic element 32 is linked, as mentioned above.

According to the invention, the blocking element 33 is able to take a first blocking condition B1, a second blocking condition B2 and a deactivation condition D.

The blocking element 33 is movable to a first blocking condition B 1 at which it is engaged with the tubular element 11 in a first engaging position P1.

The elastic element 32 is arranged so as to be in a discharged condition (which corresponds to the natural rest condition or to a precharged assembly condition), when the blocking element 33 is in the blocking condition B1.

Preferably, with reference to the embodiment of the blocking mechanism 3 illustrated in Figs. 1-6, the blocking ratchet 33 is in the blocking condition B1 when it is engaged with the edges of a first blocking opening 113 of the tubular element 11, at the first engaging position P1. The blocking element 33 is movable to a second blocking condition B2 at which it is engaged with the tubular element 11 in a second engaging position P2.

The elastic element 32 is arranged so as to be in a charged condition (in which it stores a greater amount of elastic energy with respect to the aforesaid discharged condition), when the blocking element 33 is in the blocking condition B2.

Preferably, with reference to the embodiment of the blocking mechanism 3 illustrated in Figs. 1-6, the blocking ratchet 33 is in the blocking condition B2 when it is engaged with the edges of a second blocking opening 114 of the tubular element 11, at the second engaging position P2.

Preferably, the first and second engaging positions P1 and P2 (just as the first and second blocking openings 113, 114 of the tubular element 11) are respectively in distal and proximal position with respect to the end 111 of the tubular element 11.

Preferably, when in the blocking conditions B1 or B2, the blocking element 33 protrudes partially from the tubular element 11 so as to be actuated by the user.

The blocking element 33 is movable to a deactivation condition D at which it is disengaged from the tubular element 11.

When the blocking element 33 is in the deactivation condition D, the supporting base 31 is free to move along the tubular element 11, together with the blocking element 33.

The elastic element 32 is arranged so as to be subjected to a deformation when the blocking element 33 is in the deactivation condition D and the supporting base 31 is free to move along the tubular element 11 together with the blocking element 33.

Preferably, with reference to the embodiment of Figs. 1-6, the blocking ratchet 33 is in the deactivation condition D when it is disengaged from the blocking openings 113, 114 of the tubular element 11 and, together with the supporting base 31, is free to slide along this latter (preferably along the guide slots 341, 342 of the shaped casing 34) between the engaging positions P1 and P2.

Preferably, the blocking element 33 is movable from the blocking condition B1 to the deactivation condition D, or vice versa, and is movable from the blocking condition B2 to the deactivation condition D, or vice versa.

In other words, to pass from the blocking condition B1 to the blocking condition B2, the blocking element 33 must pass through the deactivation condition D.

Preferably, as mentioned above, the blocking element 33 can pass from the blocking condition B1 to the deactivation condition D (moving with respect to the supporting base 31) as a result of an exerted external force (for example, by the user).

Preferably, as mentioned above, the blocking element 33 can pass from the deactivation condition D to the blocking condition B1 (moving with respect to the supporting base 31) as a result of a force exerted by the elastic element 35.

Preferably, with reference to the embodiment of Figs. 1-6, the blocking ratchet 33 can pass from the blocking condition B1 to the deactivation condition D, or vice versa, carrying out a rotation (respectively counter-clockwise and clockwise) around the articulation axis 334 so as to be released from or to engage with the first blocking opening 113 of the tubular element 11, at the engaging position P2.

Preferably, as mentioned above, the blocking element 33 can pass from the blocking condition B2 to the deactivation condition D (moving with respect to the supporting base 31) as a result of an exerted external force (for example, by the user).

Preferably, as mentioned above, the blocking element 33 can pass from the deactivation condition D to the blocking condition B2 (moving with respect to the supporting base 31) as a result of a force exerted by the elastic element 35.

Preferably, with reference to the embodiment of Figs. 1-6, the blocking ratchet 33 can pass from the blocking condition B2 to the deactivation condition D, or vice versa, carrying out a rotation (respectively counter-clockwise and clockwise) around the articulation axis 334 so as to be released from or to engage with the second blocking opening 114 of the tubular element 11, at the engaging position P2.

Preferably, after passage of the blocking element 33 from the blocking condition B1 to the deactivation condition D, the supporting base 31 and the blocking element 33 are movable along the tubular element 11 as a result of an exerted external force (for example, by the user).

The elastic element 32 is arranged so as to be subjected to a deformation, storing elastic energy, when the supporting base 31 and the blocking element 33 move along the tubular element 11 so that the blocking element 33 moves from the engaging position P1 to the engaging position P2.

Preferably, after passing from the blocking condition B2 to the deactivation condition D, the supporting base 31 and the blocking element 33 are movable along the tubular element 11 as a result of the force exerted by the elastic element 32.

The elastic element 32 is arranged so as to be deformed releasing elastic energy to move the supporting base 31 and the blocking element 33 along the tubular element 11 so that the blocking element 33 moves from the engaging position P2 to the engaging position P1. According to the invention, the tubular elements 11, 12 and the blocking mechanism 3 are arranged so that:
- when the blocking element 33 is in the blocking condition B1, the tubular elements 11, 12 are in the assembled state A;
- when the blocking element is in the blocking condition B2, the tubular elements 11, 12 are in the collapsed state C;
- when the blocking element 33 is in the deactivation condition D, the tubular elements 11, 12 are movable with respect to one another to pass from the assembled state A to the collapsed state C, or vice versa.

The operating modes for passage of the tubular elements 11, 12 from the assembled state A to the collapsed state C, and vice versa, and the related operation of the blocking mechanism 3 shall now be described in greater detail with reference to the embodiment of the blocking mechanism 3 illustrated in Figs. 1-8.

Initially, the tubular elements 11, 12 are in the assembled state A and the blocking element 33 is in the blocking condition B1.

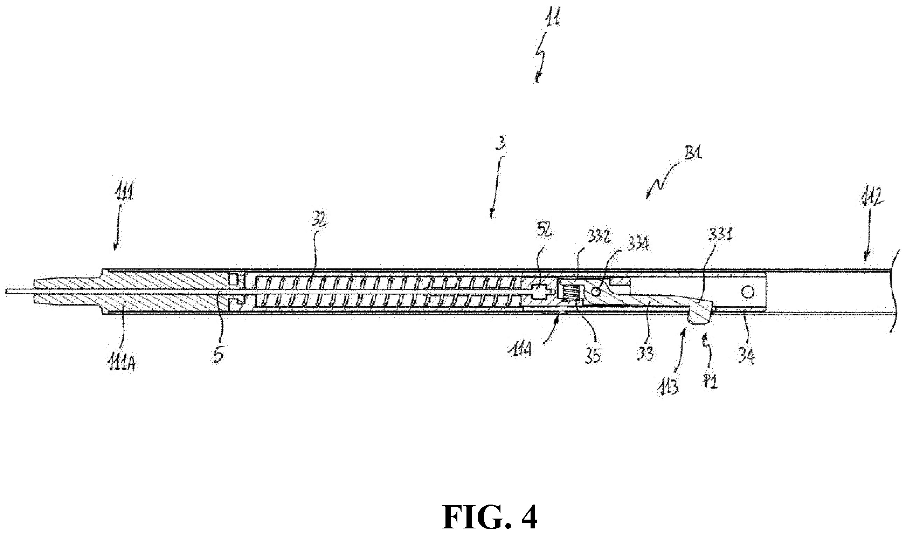

In this situation (Figs. 1, 4):
- the blocking element 33 is engaged with the tubular element 11 in the engaging position P1;
- the linking element 5 is in tension;
- the tubular elements 11, 12 are rigidly coupled to one another, at the respective ends 111, 121;
- the elastic element 32 is in a discharged condition;
- the elastic element 35 is in a discharged condition.

To carry out the maneuver, the user can actuate the blocking element 33 so as to disengage it from the tubular element 11 (deactivation of the blocking mechanism 3 by the user) and make it to pass from the blocking condition B1 to the deactivation condition D.

This movement of the blocking element 33 is opposed by the elastic element 35.

In this situation (Fig. 5):
- the blocking element 33 and the supporting base 31 are free to slide along the tubular element 11;
- the elastic element 32 is in a discharged condition;
- the elastic element 35 has been subjected to a deformation (compression) in which it accumulated elastic energy and is in a charged condition;
- the tubular elements 11, 12 are movable with respect to one another.

After having actuated the blocking element 33 taking it to the deactivation condition D, the user can exert a force (for example on the tubular element 11) to move the tubular elements 11, 12 away from one another, decoupling the ends 111, 121.

Given that the linking element 5 is inextensible and is fixed between a fixed link element 7 and the supporting base 31, relative movement between the tubular elements 11, 12 causes sliding of the supporting base 31 and of the blocking element 33 along the tubular element 11, in the direction of the end 111.

The movement of the supporting base 31 and of the blocking element 33 is opposed by the elastic element 32 that is subjected to a deformation (compression) in which it accumulates elastic energy.

During this movement with respect to the tubular element 11, the blocking element 33 remains in the deactivation condition D as it has moved from the engaging position P1 and has not yet reached the engaging position P2.

When the blocking element 33 reaches the second engaging position P2, it passes from the deactivation condition D to the blocking condition B2 engaging with the tubular element 11 (automatic activation of the blocking mechanism 3) as a result of the action of the elastic element 35 that returns to a discharged position.

In this situation (Figs. 2-3, 6):
- the blocking element 33 is engaged with the tubular element 11 in the engaging position P2;
- the linking element 5 is not completely in tension;
- the elastic element 32 has accumulated elastic energy and is in a charged condition;
- the elastic element 35 is in a discharged condition;
- the tubular elements 11, 12 are in the collapsed state C and are completely decoupled from one another.

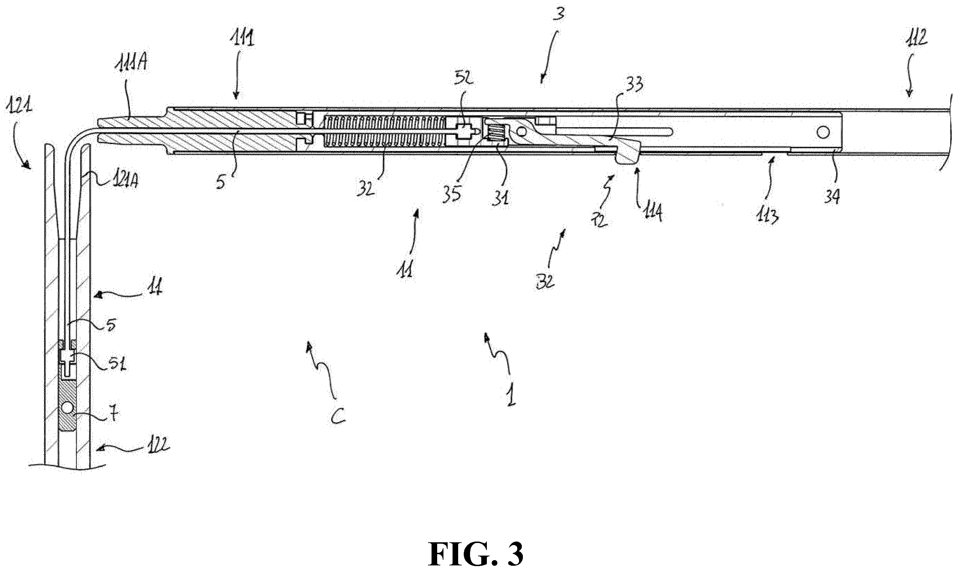

At this point, the user can fold the tubular elements 11, 12 with respect to one another (Fig. 3). This is made possible by the fact that, when the blocking element 33 is in the blocking condition B2, the linking element 5 is not completely in tension.

The excess length of the linking element 5, with respect to the completely extended condition, allows folding of the tubular elements 11, 12 with respect to one another, at the respective ends 111, 121, maintaining the link due to the flexibility of the same linking element.

To return the tubular elements 11, 12 to the assembled state A, the user can actuate the blocking element 33 so as to disengage it from the tubular element 11 (deactivation of the blocking mechanism 3 by the user) and pass from the blocking condition B2 to the deactivation condition D.

This movement of the blocking element 33 is opposed by the elastic element 35.

In this situation:
- the blocking element 33 and the supporting base 31 are free to rotate along the tubular element 11;
- the elastic element 32 is in a charged condition;
- the elastic element 35 is in a charged condition;
- the tubular elements 11, 12 are movable with respect to one another.

When the blocking element 33 disengages from the tubular element 11, the elastic element 32 is free to return to a discharged condition, releasing the elastic energy accumulated.

The elastic element 32 thus exerts a force on the supporting base 31 that causes sliding of this latter and of the blocking element 33 along the tubular element 11, in the direction of the end 112.

Given that the linking element 5 is inextensible and is fixed to a fixed link element 7 and to the supporting base 31, sliding of the supporting base 31 and of the blocking element 33 along the tubular element 11 determines a relative movement between the tubular elements 11, 12 that tend to move toward one another as a result of the force exerted by the elastic element 32. After having actuated the blocking element 33 taking it to the deactivation condition D, the user can simply assist the action of the elastic element 32 by aligning the tubular elements 11, 12 with one another so as to facilitate their relative movement toward one another.

When the blocking element 33 reaches the first engaging position PI, it passes from the deactivation condition D to the blocking condition B1 engaging with the tubular element 11 (automatic activation of the blocking mechanism 3), as a result of the action of the elastic element 35 that returns to a discharged condition.

When the blocking element 33 is in the blocking condition B1, the tubular elements 11, 12 are coupled to one another in the assembled state A.

From the above it is evident that, advantageously, with the blocking element 33 in the blocking condition B1, the blocking mechanism 3 is able to maintain the tubular elements 11, 12 rigidly coupled, preventing any relative movement, while, with the blocking element 33 in the blocking condition B2, the blocking mechanism 3 is able to maintain the elastic element 32 in a charged condition, so as to preserve the energy required for return of the blocking element from the engaging position P2 to the engaging position P1.

In alternative embodiments of the invention, the movements carried out by some components (for example the blocking element 33) of the blocking mechanism 3 could vary with respect to those indicated above in relation to the effective practical implementation of the aforesaid components.

For example, in the variant of embodiment of Fig. 6A, the blocking pin 33 moves with translatory motion with respect to the supporting base 31 to pass from the blocking condition B1 or B2 to the deactivation condition D, or vice versa.

The operating modes for passage of the tubular elements 11, 12 from the assembled state A to the collapsed state C, and vice versa, and the general operation of the blocking mechanism 3 are however altogether similar to those illustrated above.

In its practical use for the production of vehicles (for example hand pushed vehicles), furnishing items and the like, the frame 1 could comprise several pairs of tubular elements 11-12, several linking elements 5 and several blocking mechanisms 3 interacting with one another according to the operating modes described above.

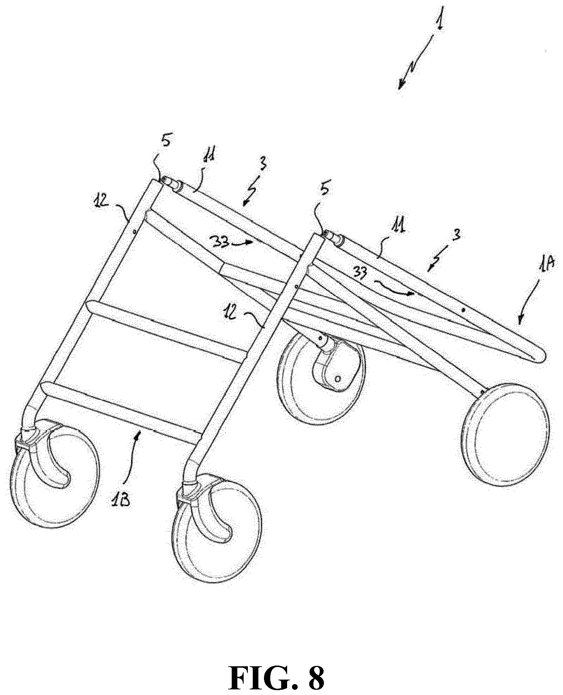

For example, in a hand pushed vehicle (stroller or trolley - Figs. 7-8), the frame 1 can comprise:
- a first pair of tubular elements formed by a first top upright 11 and a first bottom upright 12 linked to the "handlebar" 1A and to the bottom framework 1B of the vehicle, respectively;
- a second pair of tubular elements formed by a second top upright 11 and a second bottom upright 12 linked to the "handlebar" 1A and to the bottom framework 1B of the vehicle, respectively;
- a linking element 5 operatively associated with each pair of tubular elements 11, 12;
- a blocking mechanism 3 operatively associated with each pair of tubular elements 11, 12. To take the frame 100 from an open condition (Fig. 7) to a closed condition (Fig. 8), and vice versa, the user can actuate the blocking element 33 of each blocking mechanism 3.

The operating modes for passage of each pair of tubular elements 11, 12 from the assembled state A to the collapsed state C, or vice versa, and operation of the blocking mechanism 3 operatively associated with each pair of tubular elements 11, 12 correspond to those illustrated above.

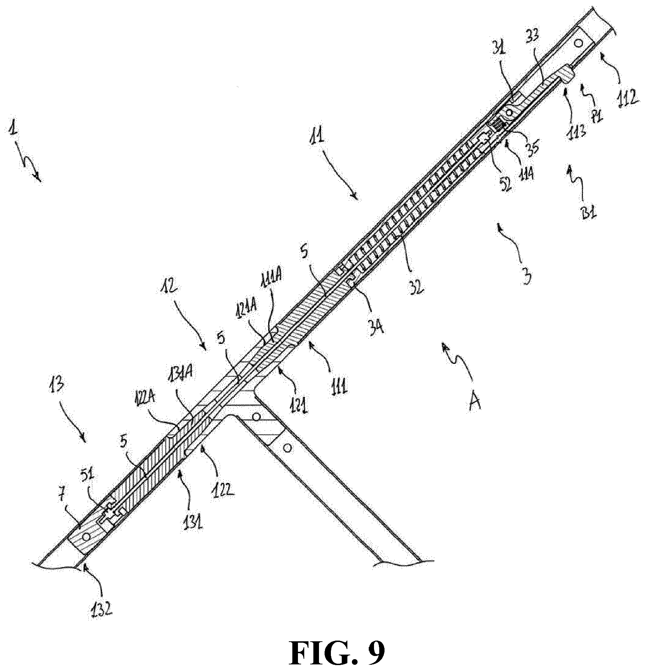

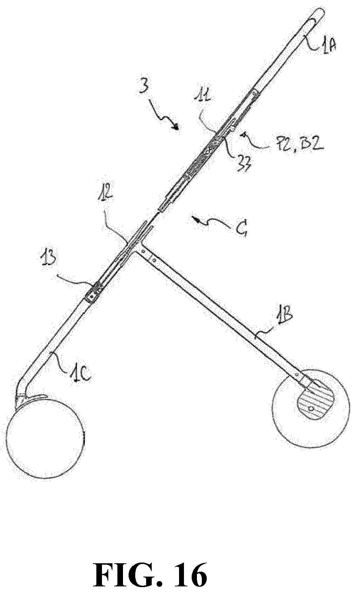

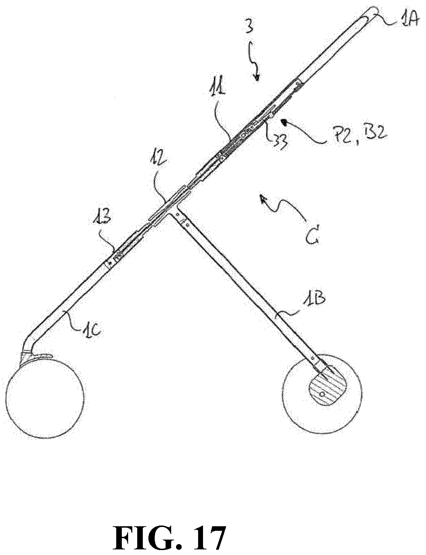

Figs. 9-17 refer to a further possible embodiment of the frame 1.

This embodiment of the frame 1 has many aspects in common with the embodiment of the frame 1 illustrated in Figs. 1-8 and described in detail above.

For evident reasons of brevity of explanation, the embodiment illustrated in Figs. 9-17 will now be described with particular reference to the aspects of differentiation with respect to the embodiment illustrated in Figs. 1-8.

In the embodiment of Figs. 9-17, the frame 1 comprises a first and second tubular element 11, 12 (having similar structure and operating functions to those described with regard to the embodiment illustrated in Figs. 1-8) and a third tubular element 13 operatively couplable to the tubular element 12.

The tubular elements 11, 12, 13 are advantageously linked respectively to a first, second and third portion of frame 1A, 1B, 1C.

As will be more apparent below, the tubular elements 11, 12, 13 and the portions of frame 1A, 1B, 1C can be any structural elements of the frame 1.

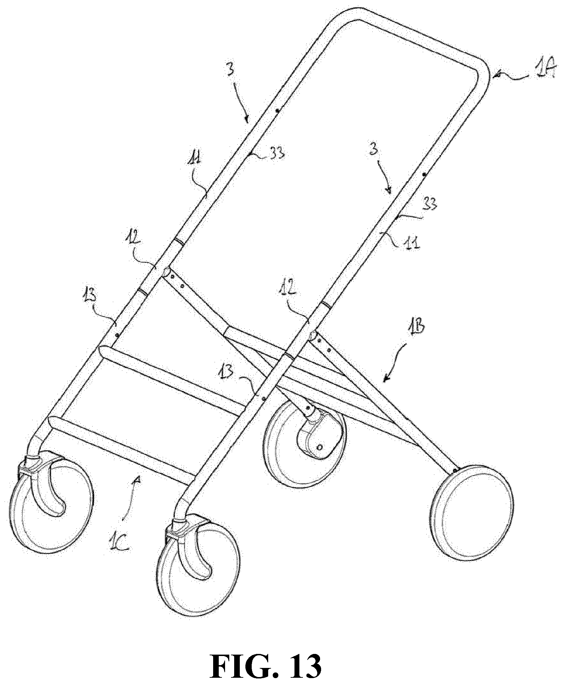

For example, in a hand pushed vehicle (stroller or trolley - Figs. 13-14), the tubular element 11 and the portion of frame 1A can respectively be a top upright and the "handlebar" of the vehicle, the tubular element 12 and the portion of frame 1B can respectively be a rear bottom upright and the linking framework with the rear wheels of the vehicle and the tubular element 13 and the portion of frame 1C can respectively be a front-bottom upright and the linking framework with the front wheels of the vehicle.

The tubular element 13 preferably has at least a partially hollow section (for example circular or polygonal in shape).

The tubular element 13 comprises seventh and eighth ends 131, 132, opposite one another. The tubular elements 12, 13 are mutually couplable respectively at their ends 122, 131. Preferably, the frame 1 comprises second coupling means for coupling the tubular elements 11, 12 to one another and the tubular elements 12, 13 to one another.

Preferably, in the embodiment illustrated in Figs. 9-17, these second coupling means respectively comprise first and second coupling connectors 111A, 121A positioned internally to the tubular elements 11, 12 and having similar structure and operating functions to the connectors of the first coupling means described with regard to the embodiment illustrated in Figs. 1-8.

Preferably, in the embodiment illustrated in Figs. 9-17, the aforesaid second coupling means also comprise third and fourth coupling connectors 122A, 131A that are part of, or are arranged internally to, the tubular elements 12, 13.

The connectors 111A, 121A are positioned at the fourth and seventh ends 131, 122 of the tubular elements 12, 13, respectively.

The connectors 122A, 131A are shaped so as to be mechanically couplable by means of shape coupling.

The connector 122A can comprise a shaped seat or a female connector in proximity of the end 122 of the tubular element 12, while the connector 131A can comprise a male connector projecting from the end 131 of the tubular element 13.

Other solutions for production of the connectors 122A, 131A are possible.

For example, the connector 122A could comprise a male connector, while the connector 131A could comprise a shaped seat or a female connector.

In the embodiment of Figs. 9-17, the frame 1 comprises a linking element 5 having similar structure and operating functions to those described with regard to the embodiment illustrated in Figs. 1-8.

In the embodiment of Figs. 9-17, the linking element 5 is adapted to maintain the tubular elements 11, 12, 13 linked to one another.

Preferably, in the embodiment of Figs. 9-17, the linking element 5 is arranged so as to pass internally to the tubular elements 11, 12, 13.

According to embodiments of the invention (not illustrated), the linking element 5 could however pass, at least partially, externally to the tubular elements 11, 12, 13.

In the embodiment of Figs. 9-17, the first fixed link element 7 (for example consisting of a mechanical stop block), to which the end 51 of the linking element 5 is linked, is preferably fixed to the tubular element 13 or to the portion of frame 1C linked to this latter.

Preferably, the connectors 111A, 121A, 122A, 131A of the second coupling means are shaped so as to allow passage of the linking element 5.

In the embodiment of Figs. 9-17, the tubular elements 11, 12 are movable between an assembled state A (Fig. 9) and a collapsed state C (Figs. 9-12), according to the operating modes described above with regard to the embodiment illustrated in Figs. 1-8.

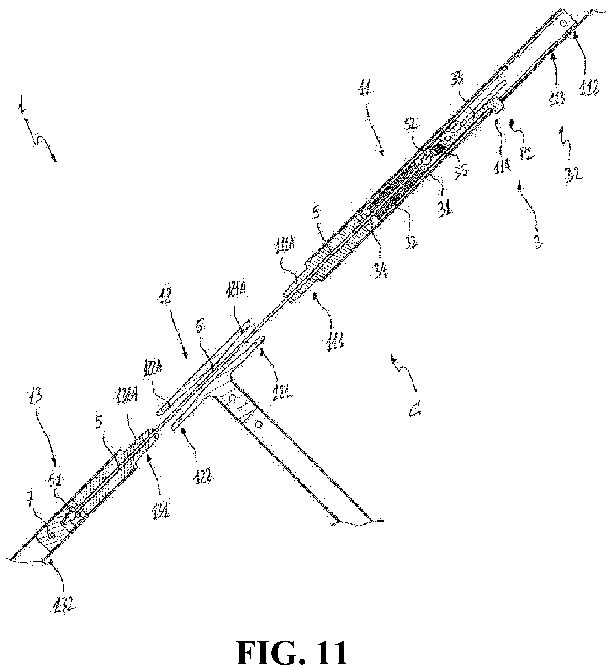

In the embodiment of Figs. 9-17, the tubular elements 12, 13 are movable between an assembled state A (Fig. 9), in which they are rigidly coupled to one another, at the respective ends 122, 131, and a collapsed state C (Figs. 11-12), in which they are folded with respect to one another at the respective ends 122, 131, and vice versa.

In the embodiment of Figs. 9-17, the frame 1 comprises a blocking mechanism 3 having similar structure and functions as those described with regard to the embodiment illustrated in Figs. 1-8.

The blocking mechanism 3 comprises a supporting base 31, a first elastic element 32, a blocking element 33 and, preferably, a shaped casing 34, a second elastic element 35 having similar structure and functions to those described with regard to the embodiment illustrated in Figs. 1-8.

In the embodiment of Figs. 9-17, the tubular elements 11, 12, 13 and the blocking mechanism 3 are arranged so that:
- when the blocking element 33 is in the blocking condition B1, the tubular elements 11, 12, 13 are in the assembled state A;
- when the blocking element is in the blocking condition B2, the tubular elements 11, 12, 13 are in the collapsed state C;
- when the blocking element 33 is in the deactivation condition D, the tubular elements 11, 12, 13 are movable with respect to one another to pass from the assembled state A to the collapsed state C, or vice versa.

The operating modes for passage of the tubular elements 11, 12, 13 from the assembled state A to the collapsed state C, and vice versa, and the related operation of the blocking mechanism 3 are now described in greater detail with reference to the embodiment of the blocking mechanism 3 illustrated in Figs. 9-17.

They are altogether similar to those described for the embodiment of Figs. 1-8.

Initially, the tubular elements 11, 12, 13 are in the assembled state A and the blocking element 33 is in the blocking condition B1.

In this situation (Fig. 9):
- the blocking element 33 is engaged with the tubular element 11 in the engaging position P1;
- the linking element 5 is completely in tension;
- the tubular elements 11, 12 are rigidly coupled to one another, at the respective ends 111, 121;
- the tubular elements 12, 13 are rigidly coupled to one another, at the respective ends 122, 131;
- the elastic element 32 is in a discharged condition;
- the elastic element 35 is in a discharged condition.

To carry out the maneuver, the user can actuate the blocking element 33 so as to disengage it from the tubular element 11 (deactivation of the blocking mechanism 3 by the user) and make it to pass from the blocking condition B1 to the deactivation condition D.

The movement of the blocking element 33 is opposed by the elastic element 35.

In this situation:
- the blocking element 33 and the supporting base 31 are free to slide along the tubular element 11;
- the elastic element 32 is in a discharged condition;
- the elastic element 35 has been subjected to a deformation (compression) in which it has accumulated elastic energy and is in a charged condition;
- the tubular elements 11, 12 are movable with respect to one another;
- the tubular elements 12, 13 are movable with respect to one another.

After having actuated the blocking element 33 taking it to the deactivation condition D, the user can exert a force (for example on the tubular element 11) to move the tubular elements 11, 12 away from one another, decoupling the ends 111, 121.

Given that the linking element 5 is inextensible and is fixed between a fixed link element 7 and the supporting base 31, relative movement between the tubular elements 11, 12 determines sliding of the supporting base 31 and of the blocking element 33 along the tubular element 11, in the direction of the end 111.

The movement of the supporting base 31 and of the blocking element 33 is opposed by the elastic element 32 that is subjected to a deformation (compression) in which it accumulates elastic energy.

During this movement with respect to the tubular element 11, the blocking element 33 remains in the deactivation condition D having moved from the engaging position P1 and not having yet reached the engaging position P2.

When the blocking element 33 reaches the second engaging position P2, it passes from the deactivation condition D to the blocking condition B2 engaging with the tubular element 11 (automatic activation of the blocking mechanism 3) as a result of the action of the elastic element 35 that returns to a discharged condition.

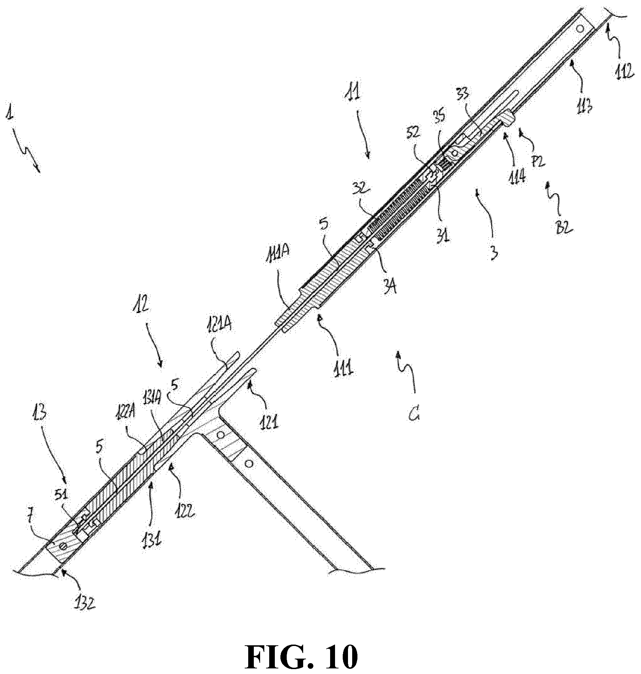

In this situation (Figs. 10-12):
- the blocking element 33 is engaged with the tubular element 11 in the first engaging position P2;
- the linking element 5 is not completely in tension;
- the elastic element 32 is in a charged condition;
- the elastic element 35 is in a discharged condition;
- the tubular elements 11, 12 are in the collapsed state C and are completely decoupled from one another;
- the tubular elements 12, 13 are in the collapsed state C but not yet decoupled from one another.

At this point, the user can separate the tubular elements 12, 13 from one another and fold the tubular elements 11, 12 and the tubular elements 12, 13 with respect to one another.

The user can obtain complete decoupling between the tubular elements 12, 13, in the collapsed state C, moving the tubular element 11 slightly toward the tubular element 12 (while maintaining the two tubular elements decoupled from one another) so as to assist the action of the weight force of the portion of frame 1C that tends to separate the tubular elements 12, 13 from one another (Fig. 11).

This is made possible by the fact that, when the blocking element 33 is in the blocking condition B2, the linking element 5 is not completely in tension.

The excess length of the linking element 5, with respect to the completely extended condition, allows relative movement between the elements 12, 13 (in the collapsed state C) so as to obtain complete decoupling.

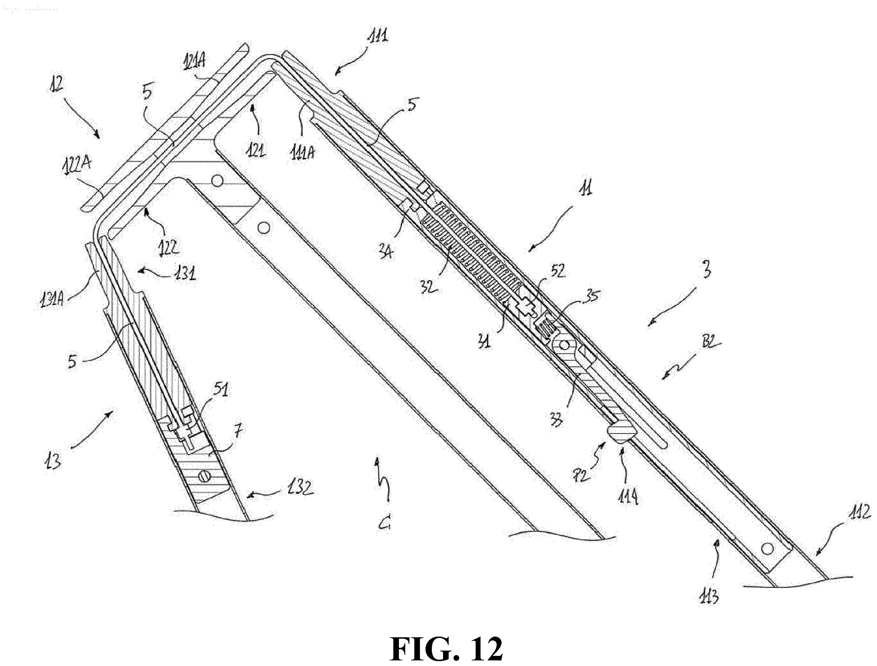

The excess length of the linking element 5, with respect to the condition of complete extension, also allows subsequent folding of the tubular elements 11, 12 with respect to one another, at the respective ends 111, 121, and of the tubular elements 12, 13 with respect to one another, at the respective ends 122, 131, maintaining the link (Fig. 12).

To return the tubular elements 11, 12, 13 to the assembled state A, the user can actuate the blocking element 33 so as to disengage it from the tubular element 11 (deactivation of the blocking mechanism 3 by the user) and pass from the blocking condition B2 to the deactivation condition D.

In this situation:
- the blocking element 33 and the supporting base 31 are free to slide along the tubular element 11;
- the elastic element 32 is in a charged condition;
- the elastic element 35 has been subjected to a deformation (compression) in which it has accumulated elastic energy and is in a charged condition;
- the tubular elements 11, 12 are movable with respect to one another;
- the tubular elements 12, 13 are movable with respect to one another.

When the blocking element 33 disengages from the tubular element 11, the elastic element 32 is free to return to a discharged condition, releasing the elastic energy accumulated.

The elastic element 32 thus exerts a force on the supporting base 31 that causes sliding of this latter and of the blocking element 33 along the tubular element 11, in the direction of the end 112.

Given that the linking element 5 is inextensible and is fixed to a fixed link element 7 and to the supporting base 31, sliding of the supporting base 31 and of the blocking element 33 along the tubular element 11 determines a relative movement between the tubular elements 11, 12 and between the tubular elements 12, 13 that tend to move toward one another as a result of the force exerted by the elastic element 32.

After having actuated the blocking element 33 taking it to the deactivation condition D, the user can simply assist the action of the elastic element 32 by aligning the tubular elements 11, 12 and the tubular elements 12, 13 with one another so as to facilitate their relative movement toward one another.

When the blocking element 33 reaches the first engaging position PI, it passes from the deactivation condition D to the blocking condition B1 engaging with the tubular element 11 (automatic activation of the blocking mechanism 3), as a result of the action of the elastic element 35 that returns to a discharged condition.

In this situation, the tubular elements 11, 12 and the tubular elements 12, 13 are coupled to one another in the assembled state A.

In alternative embodiments of the invention, the movements carried out by some components (for example the blocking element 33) of the blocking mechanism 3 could vary with respect to those indicated above in relation to the effective practical implementation of the aforesaid components.

The operating modes for passage of the tubular elements 11, 12 from the assembled state A to the collapsed state C, and vice versa, and the general operation of the blocking mechanism 3 are however altogether similar to those illustrated above.

In its practical use to produce vehicles, furnishing items and the like, the frame 1 could comprise several groups of tubular elements 11-13, several linking cables 5 and several blocking mechanisms 3 interacting with one another according to the modes described above.

For example, in a hand pushed vehicle (stroller or trolley - Figs. 13-14), the frame 1 can comprise:
- a first group of tubular elements 11, 12, 13 consisting of a first top upright, a first bottom rear upright and a first bottom front upright linked to the "handlebar" 1A, to the linking framework 1B with the rear wheels of the vehicle and to the linking framework 1C with the front wheels of the vehicle, respectively;
- a second group of tubular elements 11, 12, 13 consisting of a second top upright, a second bottom rear upright and a second bottom front upright linked to the "handlebar" 1A, to the linking framework 1B with the rear wheels of the vehicle and to the linking framework 1C with the front wheels of the vehicle, respectively;
- a linking element 5 operatively associated with each group of tubular elements 11, 12, 13;
- a blocking mechanism 3 operatively associated with each group of tubular elements 11, 12, 13.

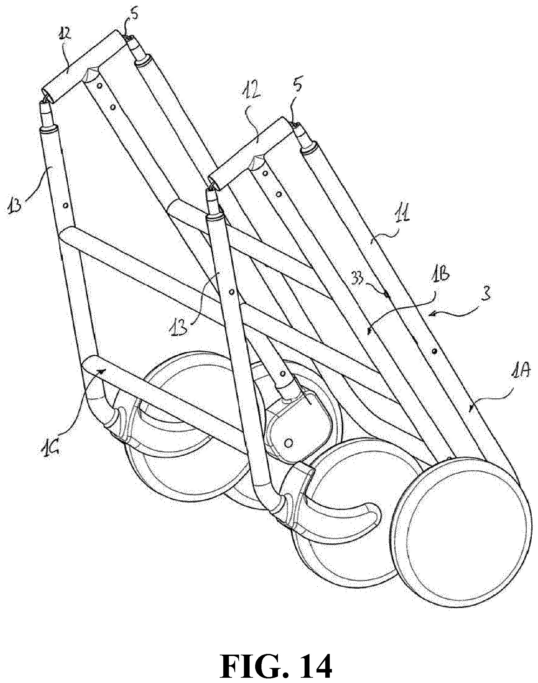

To take the frame 100 of the vehicle illustrated in Figs. 13-14, from an open condition (Fig. 13) to a closed condition (Fig. 14), and vice versa, the user can actuate the blocking element 33 of each blocking mechanism 3.

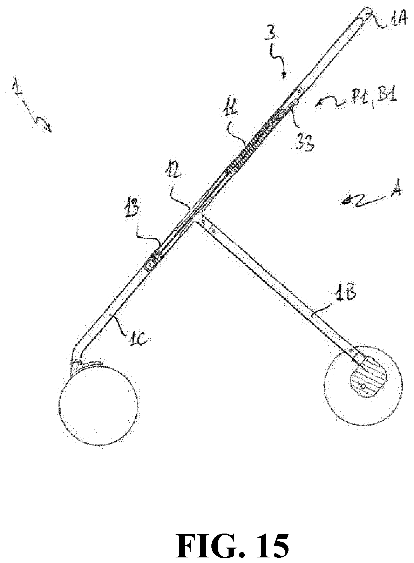

The operating modes for passage of each pair of tubular elements 11, 12, 13 from the assembled state A to the collapsed state C, and vice versa, and operation of the blocking mechanism 3 operatively associated with each group of tubular elements 11, 12, 13 correspond to those illustrated above, as can be seen from Figs. 15-17, which show the sequence of operating configurations already illustrated in Figs. 9-12.

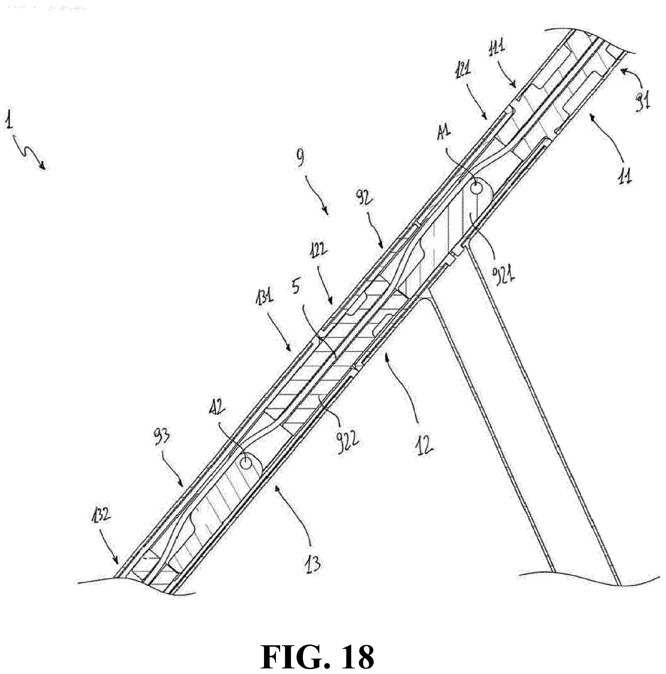

Figs. 18-24 refer to a further possible embodiment of the frame 1.

This embodiment of the frame 1 has many aspects in common with the embodiment of the frame 1 illustrated in Figs. 9-17 and described above in detail.

For evident reasons of brevity of explanation, the embodiment illustrated in Figs. 18-24 will now be described with reference to the aspects of differentiation with respect to the embodiment illustrated in Figs. 9-17.

In the embodiment of Figs. 18-24, the frame 1 comprises a first, second and third tubular element 11, 12, 13 having similar structure and operating functions to those described with regard to the embodiment illustrated in Figs. 9-17.

In the embodiment of Figs. 18-24, the frame 1 comprises a linking element 5 having similar structure and operating functions to those described with regard to the embodiment illustrated in Figs. 9-17.

In the embodiment of Figs. 18-24, the frame 1 comprises a blocking mechanism 3 having similar structure and operating functions to those described with regard to the embodiment illustrated in Figs. 9-17.

In the embodiment of Figs. 18-24, unlike the embodiment of Figs. 9-17, the second coupling means of the frame 1 comprise a coupling kinematic chain 9 passing internally to the tubular elements 11, 12, 13.

The kinematic chain 9 is fixed, at a portion thereof, to the tubular element 11 at the end 111 of this latter. Therefore, it moves integrally with the tubular element 11.

The kinematic chain 9 is slidingly coupled with the tubular elements 12, 13, preferably by means of shape coupling. It is therefore slidingly movable with respect to the tubular elements 12, 13.

Preferably, the kinematic chain 9 is shaped so as to allow passage of the linking element 5 internally to the elements 11, 12, 13.

The kinematic chain 9 comprises a plurality of segments 91, 92, 93 articulated to one another at a plurality of articulation axes A1, A2.

Preferably, the kinematic chain 9 comprises one or more joining elements (for example pins or rivets) at the articulation axes A1, A2. These joining elements are advantageously arranged so as to allow passage of the linking element 5.

Preferably, the kinematic chain 9 comprises a first, second and third segment 91, 92, 93. Preferably, the segments 91, 92, 93 are articulated to one another so as to be able to translate, integrally, along the tubular elements 12, 13 (integrally with the tubular element 11) and to be able to rotate with respect to one another at the articulation axes A1, A2.

Preferably, the segment 91 of the kinematic chain 9 is fixed to the tubular element 11 and is slidingly couplable with the tubular element 12.

Preferably, the segment 92 of the kinematic chain 9 is slidingly coupled with the tubular element 12 and slidingly couplable with the tubular element 13.

Preferably, the segment 93 of the kinematic chain 9 is slidingly coupled with the tubular element 13.

Preferably, the segments 91, 92 of the kinematic chain 9 are linked and articulated with one another at a first articulation axis A1.

Preferably, the segments 92, 93 of the kinematic chain 9 are linked and articulated with one another at a second articulation axis A2.

Preferably, the articulation axis A1 (advantageously perpendicular to the tubular elements 11, 12) is oriented so as to allow the segments 91, 92 of the kinematic chain 9 to rotate with respect to one another and to move integrally (with translatory motion) along the tubular element 12. Preferably, the articulation axis A2 (advantageously perpendicular to the tubular elements 12, 13) is oriented so as to allow the segments 92, 93 of the kinematic chain 9 to rotate with respect to one another and to move integrally (with translatory motion) along the tubular element 13. Preferably, the segment 92 of the kinematic chain 9 comprises a first portion 921 and a second portion 922 respectively in distal and proximal position with respect to the tubular element 13. Preferably, the first portion 921 of the segment 92 is slidingly coupled with the tubular element 12 and is linked to the segment 91 of the kinematic chain 9 at the articulation axis A1. Preferably, the second portion 922 of the segment 92 is slidingly coupled with the tubular elements 12, 13 and is linked to the segment 93 of the kinematic chain 9 at the articulation axis A2.

In the embodiment of Figs. 18-24, the first and second portion 921, 922 of the segment 92 are rigidly connected to one another. For example, they can form a single body.

The operating modes for passage of the tubular elements 11, 12, 13 from the assembled state A to the collapsed state C, and vice versa, and the related operation of the blocking mechanism 3 are altogether similar to those described with regard to the embodiment illustrated in Figs. 9-17.

Nonetheless, they will be described briefly below with reference to some important aspects of the embodiment illustrated in Figs. 18-24.

Initially, the tubular elements 11, 12, 13 are in the assembled state A and the blocking element 33 is in the blocking condition B1.

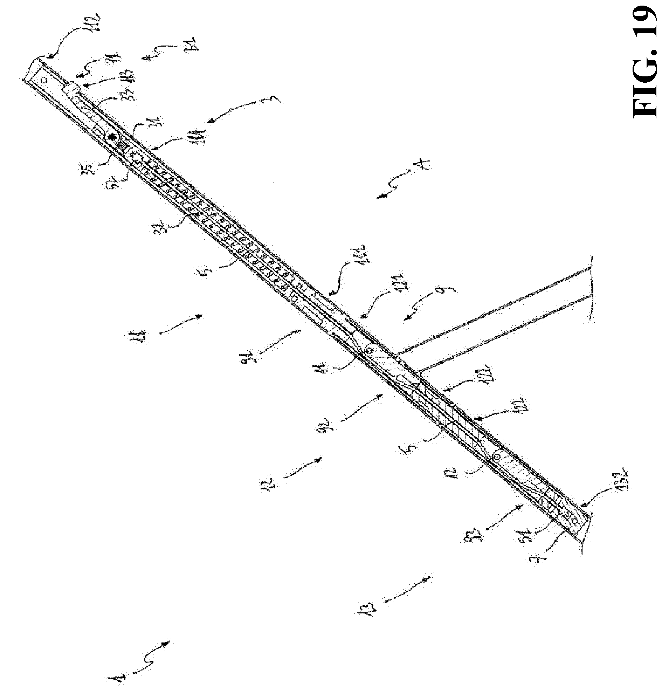

In this situation (Figs. 18, 19):
- the blocking element 33 is engaged with the tubular element 11 in the engaging position P1;
- the tubular elements 11, 12 are rigidly coupled to one another and the tubular elements 12, 13 are rigidly coupled to one another;
- the first articulation axis A1 is positioned internally to the tubular element 12;
- the second articulation axis A2 is positioned internally to the tubular element 13.

The user can actuate the blocking element 33 so as to disengage it from the tubular element 11 (deactivation of the blocking mechanism 3 by the user) and pass from the blocking condition B1 to the deactivation condition D.

In this situation:
- the blocking element 33 and the supporting base 31 are free to slide along the tubular element 13;
- the tubular elements 11, 12 are movable with respect to one another;
- the tubular elements 12, 13 are movable with respect to one another;
- the coupling kinematic chain 9 is movable with respect to the tubular elements 12, 13 (integrally with the tubular element 11).

After having actuated the blocking element 33 taking it to the deactivation condition D, the user can exert a force (for example on the tubular element 11) to move the tubular elements 11, 12 away from one another, decoupling the ends 111, 121.

Relative movement between the tubular elements 11, 12 determines sliding of the supporting base 31 and of the blocking element 33 along the tubular element 11.

The coupling kinematic chain 9 and the related articulation axes A1, A2 move integrally with the tubular element 11 carrying out a translation (away from) with respect to the tubular elements 12, 13.

When the blocking element 33 reaches the second engaging position P2, it passes from the deactivation condition D to the blocking condition B2 engaging with the tubular element 11 (automatic activation of the blocking mechanism 3), as a result of the action of the elastic element 35.

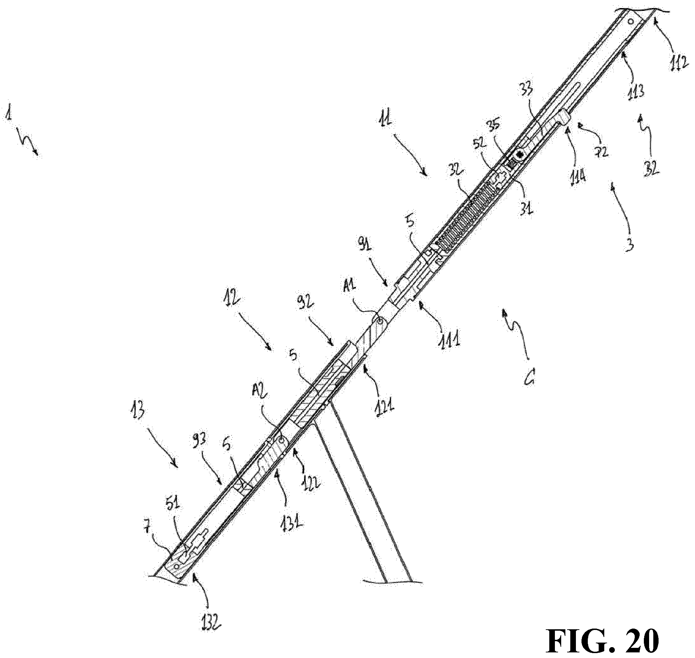

In this situation (Figs. 20-22):
- the blocking element 33 is engaged with the tubular element 11 in the engaging position P2;
- the linking element 5 is not completely in tension;
- the tubular elements 11, 12 are in the collapsed state C and are completely decoupled from one another;
- the tubular elements 12, 13 are in the collapsed state C but are not yet decoupled from one another;
- the first articulation axis A1 is positioned externally to the tubular element 12 and externally to the tubular element 11;
- the second articulation axis A2 is positioned at the end 122 of the tubular element 12 and the end 131 of the tubular element 13 (these ends are still coupled to one another).

At this point, the user can separate the tubular elements 12, 13 from one another and fold the tubular elements 11, 12 and 12, 13 with respect to one another.

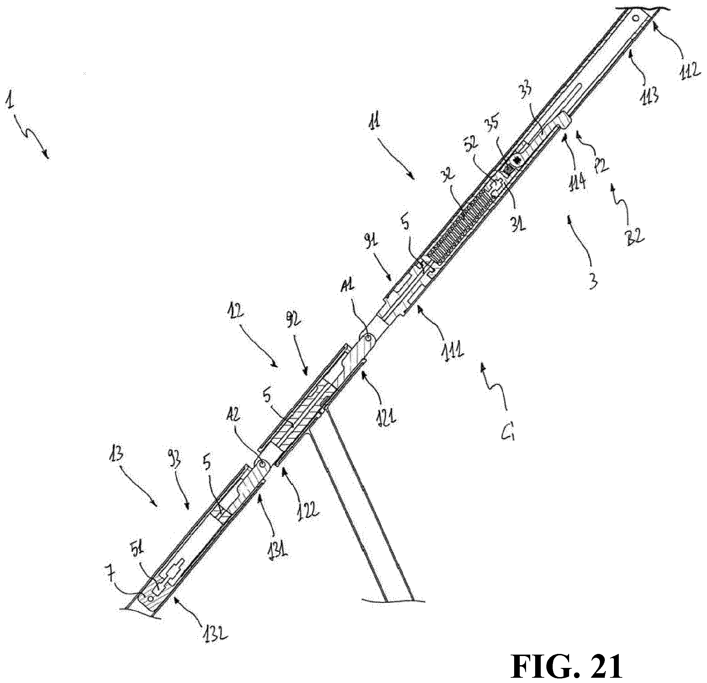

The user can obtain complete decoupling of the tubular elements 12, 13, in the collapsed state C, moving the tubular element 11 slightly toward the tubular element 12 (while maintaining the two tubular elements decoupled from one another) so as to so as to assist the action of the weight force of the portion of frame 1C that tends to separate the tubular elements 12, 13 from one another (Fig. 21).

The excess length of the linking element 5, with respect to the completely extended condition, allows relative movement between the elements 12, 13 (in the collapsed state C) so as to obtain complete decoupling.

When the tubular elements 12, 13 are completely decoupled from one another, the second articulation axis A2 is positioned externally to the tubular elements 12, 13 (Fig. 21).

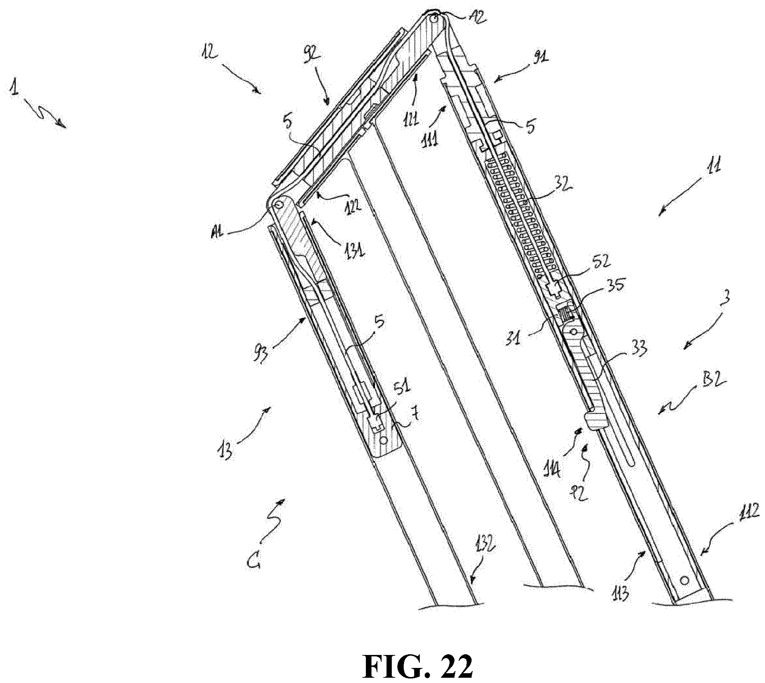

The excess length of the linking element 5, with respect to the completely extended condition, also allows subsequent folding of the tubular elements 11, 12 with respect to one another, at the respective ends 111, 121, and of the tubular elements 12, 13 with respect to one another, at the respective ends 122, 131, maintaining the link (Fig. 22).

The kinematic chain 9 allows folding between the tubular elements 11, 12 and between the tubular elements 12, 13 to be carried out (when these tubular elements are in the collapsed state C) performing a linked movement along a reference plane perpendicular to the articulation axes A1, A2.

It is therefore possible to prevent the occurrence of relative rotation movements between the aforesaid tubular elements.

This simplifies the maneuvers that the user must carry out to fold the tubular elements and to take them from the collapsed state C to the assembled state A.

To return the tubular elements 11, 12 and the tubular elements 12, 13 to the assembled state A, the user can actuate the blocking element 33 so as to disengage it from the tubular element 11 (deactivation of the blocking mechanism 3 by the user) and pass from the blocking condition B2 to the deactivation condition D.

The first elastic element 32, returning to a discharged condition, exerts a force that causes sliding of the supporting base 31 and of the blocking element 33 along the tubular element 11, in the direction of the end 112.

Given that the linking element 5 is inextensible and is fixed to a fixed link element 7 and to the supporting base 31, sliding of the supporting base 31 and of the blocking element 33 along the tubular element 11 determines a relative movement between the tubular elements 11, 12 and between the tubular elements 12, 13 that tend to move toward one another as a result of the force exerted by the elastic element 32.

The kinematic chain 9 and the related articulation axes A1, A2 move integrally with the tubular element 11 carrying out a translation (toward) with respect to the tubular elements 12, 13.

After having actuated the blocking element 33 taking it to the deactivation condition D, the user can simply assist the action of the elastic element 32 aligning the tubular elements 11, 12 and the tubular elements 12, 13 with one another so as to facilitate the related movement toward one another.

This action is greatly facilitated by the presence of the kinematic chain 9 that links the tubular elements 11, 12 and the tubular elements 12, 13 to move along a plane perpendicular to the articulation axes A1, A2.

When the blocking element 33 reaches the first engaging position PI, it passes from the deactivation condition D to the blocking condition B1 engaging with the tubular element 11 (automatic actuation of the blocking mechanism 3), as a result of the elastic element 35.

In this situation, the tubular elements 11, 12 and the tubular elements 12, 13 are rigidly coupled to one another in the assembled state A.

The articulation axes A1, A2 are respectively positioned internally to the tubular elements 12, 13.

Also in the embodiment of Figs. 18-24, the frame 1 could comprise several groups of tubular elements 11-13, several linking cables 5 and several blocking mechanisms 3 interacting with one another according to the modes described above.

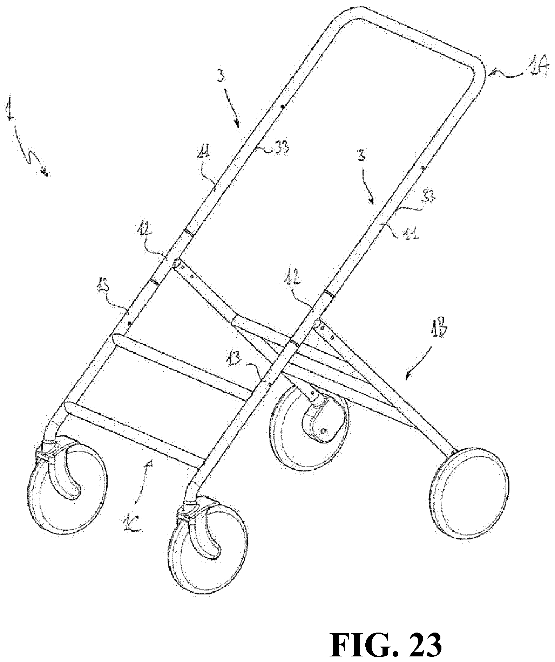

For example, in a hand pushed vehicle (stroller or trolley - Figs. 23-24), the frame 1 can comprise:
- a first group of tubular elements 11, 12, 13 consisting of a first top upright, a first bottom rear upright and a first bottom front upright linked to the "handlebar" 1A, to the linking framework 1B with the rear wheels of the vehicle and to the linking framework 1C with the front wheels of the vehicle, respectively;
- a second group of tubular elements 11, 12, 13 consisting of a second top upright, a second bottom rear upright and a second bottom front upright linked to the "handlebar" 1A, to the linking framework 1B with the rear wheels of the vehicle and to the linking framework 1C with the front wheels of the vehicle, respectively;
- a linking element 5 operatively associated with each group of tubular elements 11, 12, 13;
- a blocking mechanism 3 operatively associated with each group of tubular elements 11, 12, 13.

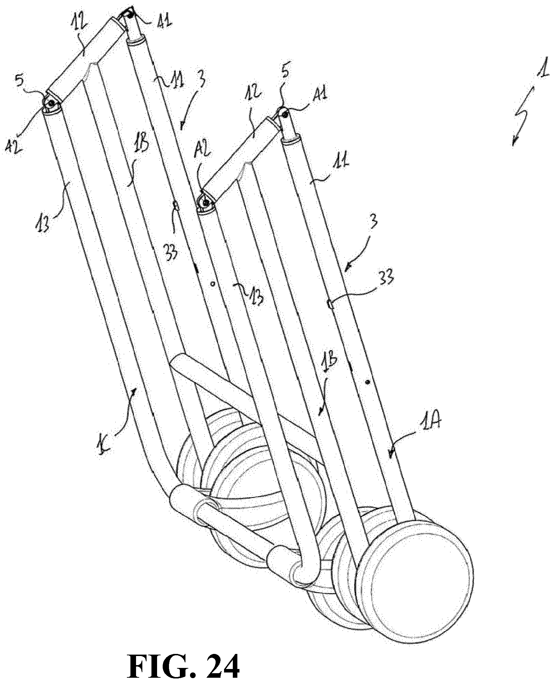

To take the frame 100 of the vehicle illustrated in Figs. 23-24, from an open condition (Fig. 23) to a closed condition (Fig. 24), and vice versa, the user can actuate the blocking element 33 of each blocking mechanism 3.

The operating modes for passage of each pair of tubular elements 11, 12, 13 from the assembled state A to the collapsed state C, and vice versa, and operation of the blocking mechanism 3 operatively associated with each group of tubular elements 11, 12, 13 correspond to those illustrated above (Figs. 18-22).

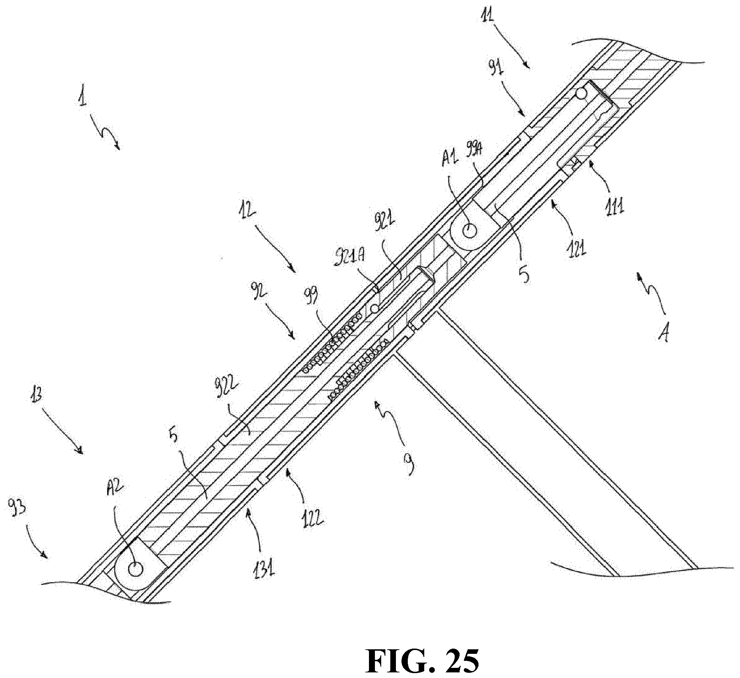

Figs. 25-30 refer to a further possible embodiment of the frame 1.

This embodiment of the frame 1 has many aspects in common with the embodiment of the frame 1 illustrated in Figs. 18-24 and described above in detail.

For evident reasons of brevity of explanation, the embodiment illustrated in Figs. 25-30 will be described below with reference to the aspects of differentiation with respect to the embodiment illustrated in Figs. 18-24.

In the embodiment of Figs. 25-30, the frame 1 comprises a first, second and third tubular element 11, 12, 13 having similar structure and operating functions to those described with regard to the embodiment illustrated in Figs. 18-24.

In the embodiment of Figs. 25-30, the frame 1 comprises a linking element 5 having the same structure and operating functions as those described with regard to the embodiment illustrated in Figs. 18-24.

In the embodiment of Figs. 25-30, the frame 1 comprises a blocking mechanism 3 having the same structure and operating functions as those described with regard to the embodiment illustrated in Figs. 18-24.

In the embodiment of Figs. 25-30, the second coupling means of the frame 1 comprise a coupling kinematic chain 9 having the same structure and operating functions as those described with regard to the embodiment illustrated in Figs. 18-24.

In the embodiment of Figs. 25-30, unlike the embodiment illustrated in Figs. 18-24, the second segment 92 of the kinematic chain 9 preferably comprises first and second portions 921, 922 that are not rigidly connected to one another.

In the embodiment of Figs. 25-30, the kinematic chain 9 comprises a third elastic element 99 adapted to operatively link the first and second portion 921, 922 of the segment 92 of the kinematic chain 9 to one another.

The portions 921, 922 of the third segment 92 are arranged so as to be able to move with respect to one another in opposition to a force exerted by the elastic element 99.

Preferably, the portions 921, 922 of the third segment 92 and the elastic element 99 are arranged coaxially to one another.

Preferably, the elastic element 99 is operatively linked between the respective ends of the portions 921, 922 that are in distal position with respect to the tubular elements 11, 13. Preferably, the elastic element 99 has ends integrally linked with the aforesaid ends of the portions 921, 922.

Preferably, the elastic element 99 is a spring that can be of known type.

Preferably, the frame 1 comprises limit stop means 99A, 921A adapted to limit the movement of the tubular element 11 (and therefore to define an end of travel position for this latter), when the tubular element 11 is separated from the tubular element 12.

Preferably, the aforesaid limit stop means comprise a shaped edge 99A of the internal wall of the tubular element 12 and a shaped edge 921A of the portion 921 of the segment 92 of the kinematic chain 9.

The shaped edges 99A, 921A are intended to couple with one another, when the tubular element 11 is separated from the tubular element 12 reaching the end of travel position.

The operating modes for passage of the tubular elements 11, 12, 13 from the assembled state A to the collapsed state C, and vice versa, and the related operation of the blocking mechanism 3 are substantially the same as those described with regard to the embodiment illustrated in Figs. 18-24.

Nonetheless, they will be briefly described below with reference to some important aspects of the embodiment illustrated in Figs. 25-30.

Initially, the tubular elements 11, 12, 13 are in the assembled state A and the blocking element 33 is in the blocking condition B1.

In this situation (Fig. 25 - similar to Fig. 19):
- the blocking element 33 is engaged with the tubular element 11 in the first engaging position P1;
- the tubular elements 11, 12 are rigidly coupled to one another and the tubular elements 12, 13 are rigidly coupled to one another;
- the first articulation axis A1 is positioned internally to the tubular element 12;
- the second articulation axis A2 is positioned internally to the tubular element 13.

The user can actuate the blocking element 33 so as to disengage it from the tubular element 11 (deactivation of the blocking mechanism 3 by the user) and pass from the blocking condition B1 to the deactivation condition D.

In this situation:
- the blocking element 33 and the supporting base 31 are free to slide along the tubular element 13;
- the tubular elements 11, 12 are movable with respect to one another;
- the tubular elements 12, 13 are movable with respect to one another;
- the coupling kinematic chain 9 is movable with respect to the tubular elements 12, 13 (integrally with the tubular element 11).

After having actuated the blocking element 33 taking it to the deactivation condition D, the user can exert a force (for example on the tubular element 11) to move the tubular elements 11, 12 away from one another, decoupling the ends 111, 121.

The tubular element 11 can be moved away from the tubular element 12 until reaching the end of travel position established by the limit stop means 99A, 921A.

Relative movement between the tubular elements 11, 12 determines sliding of the supporting base 31 and of the blocking element 33 along the tubular element 11.

The first segment 91 of the kinematic chain 9, the first portion 921 of the second segment 92 of the coupling kinematic chain 9 and the related articulation axis A1 move integrally with the first tubular element 11.

The third segment 93 of the kinematic chain 9, the second portion 922 of the second segment 92 of the kinematic chain 9 and the related articulation axis A2 are linked to the first portion 921 of the segment 92 of the kinematic chain 9 by means of the elastic element 99.

Given that the second portion 922 of the second segment 92 and the third segment 93 of the kinematic chain 9 are free to move, the first portion 921 of the second segment 92 can draw the second portion 922 of the second segment 92 and the third segment 93 without appreciable deformations of the elastic element 99 that remains substantially in a discharged condition. Therefore, in this phase the kinematic chain 9 and the related articulation axes A1, A2 move integrally with the tubular element 11 carrying out a movement (away from) with respect to the tubular elements 12, 13.

When the blocking element 33 reaches the second engaging position P2, it passes from the deactivation condition D to the blocking condition B2 engaging with the tubular element 11 (automatic activation of the blocking mechanism 3), as a result of the action of the elastic element 35.

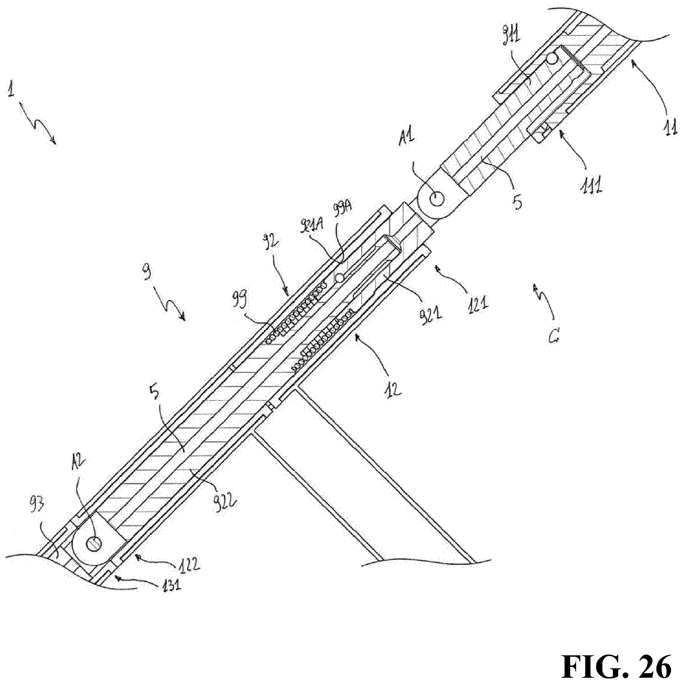

In this situation (Fig. 26 - similar to Fig. 20):
- the blocking element 33 is engaged with the tubular element 11 in the engaging position P2;
- the linking element 5 is not completely in tension;
- the tubular elements 11, 12 are in the collapsed state C and are completely decoupled from one another;
- the tubular element 11 has reached the end of travel position;
- the tubular elements 12, 13 are in the collapsed state C but not yet decoupled from one another;
- the first articulation axis A1 is positioned externally to the tubular element 12 and externally to the tubular element 11;
- the second articulation axis A2 is positioned at the end 122 of the tubular element 12 and the end 131 of the tubular element 13 (these ends are still coupled to one another).

At this point, the user can separate the tubular elements 12, 13 from one another and fold the tubular elements 11, 12 and 12, 13 with respect to one another.

The user can first fold the tubular elements 11, 12 with respect to one another maintaining the tubular element 11 in the end of travel position.

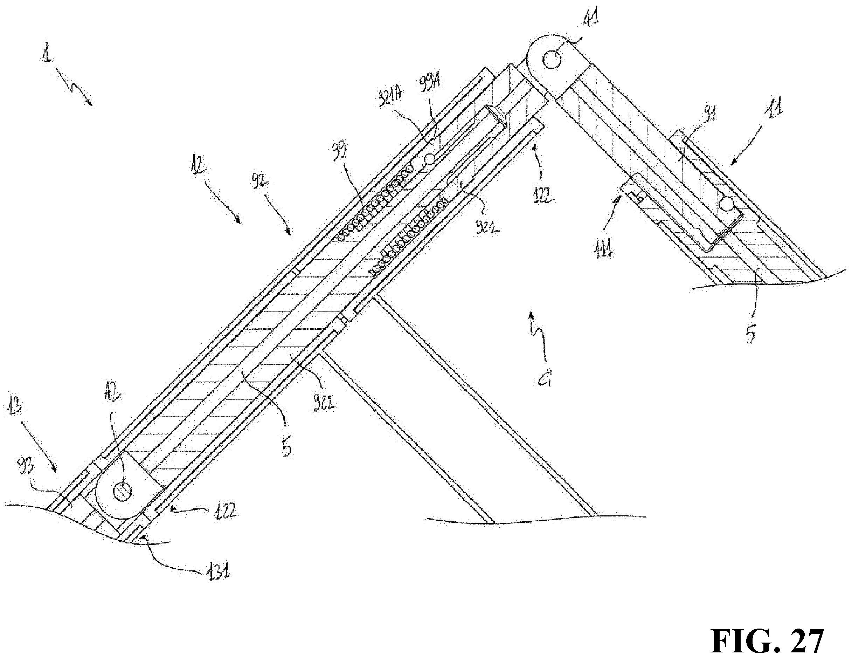

The user can then fold the tubular elements 12, 13 with respect to one another obtaining, simultaneously, complete decoupling (Fig. 27).

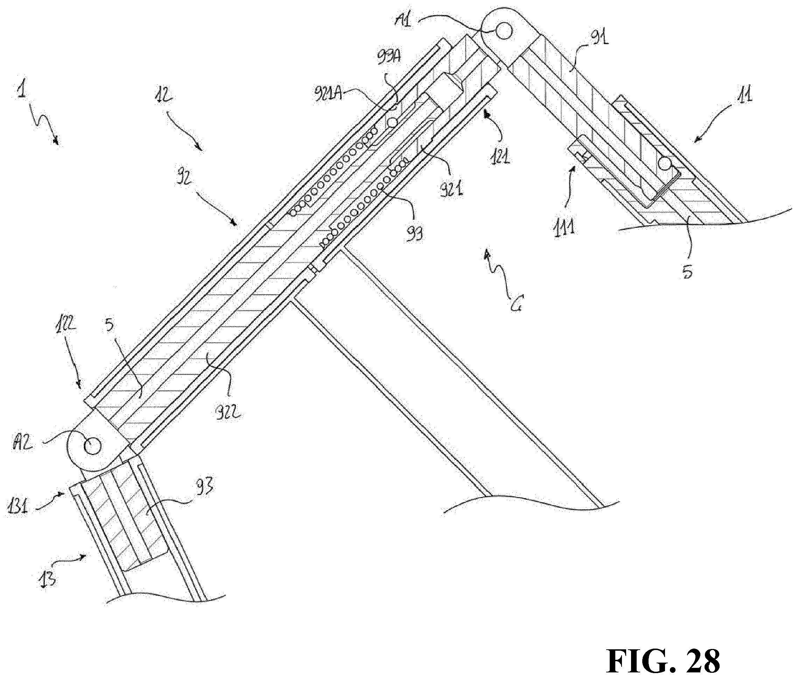

Folding (by means of mutual rotation) of the tubular elements 12, 13 takes place as a result of the elastic element 99 that deforms, as the ends are subject to opposed forces (Fig. 28).

The end of the elastic element 99, in proximal position with respect to the tubular element 11, is subject to a force directed toward the tubular element 11, this latter being maintained in the end of travel position as a result of the fact that, as the tubular elements 11, 12 are folded with respect to one another, the first segment 91 of the kinematic chain 9, in proximity of the articulation point A1, abuts against the end 121 of the tubular element 12.

The end of the elastic element 99 in proximal position with respect to the tubular element 11 is subject to a force directed toward the tubular element 13 due to folding of the tubular elements 12, 13 with respect to one another.

The tubular elements 12, 13 can in fact rotate with respect to one another by levering on one another at the respective ends 122, 131.

The elastic element 99 is thus subjected to a deformation in a direction coaxial with the tubular element 12.

Also in the embodiment of Figs. 25-30, the excess length of the linking element 5, with respect to the completely extended condition, allows relative movement between the elements 12, 13 (in the collapsed state C) so as to obtain complete decoupling and simultaneous folding. When the tubular elements 12, 13 are completely decoupled from one another, the second articulation axis A2 is positioned at the end of the tubular elements 12, 13 (Fig. 28).

Just as in the embodiment of Figs. 18-24, the arrangement of the kinematic chain 9 simplifies the maneuvers that the user must carry out to fold the tubular elements 11, 12 and the tubular elements 12, 13 and simplifies the maneuvers that the user must carry out to take the aforesaid tubular elements from the collapsed state C to the assembled state A.

The arrangement of the segment 92 of the kinematic chain 9, provided with portions 921, 922 linked to one another by the elastic element 99, allows simplification of the maneuvers that the user must carry out to separate the tubular elements 12, 13 from one another when the tubular elements 11, 12 and the tubular elements 12, 13 have reached the collapsed state.

To return the tubular elements 11, 12 and the tubular elements 12, 13 to assembled state A, the user can actuate the blocking element 33 so as to disengage it from the tubular element 11 (deactivation of the blocking mechanism 3 by the user) and pass from the blocking condition B2 to the deactivation condition D.

The elastic element 32, returning to a discharged condition, exerts a force that causes sliding of the supporting base 31 and of the blocking element 33 along the tubular element 11, in the direction of the end 112.

Given that the linking element 5 is inextensible and is fixed to a fixed link element 7 and to the supporting base 31, sliding of the supporting base 31 and of the blocking element 33 along the tubular element 11 determines a relative movement between the tubular elements 11, 12 and between the tubular elements 12, 13 that tend to move toward one another as a result of the force exerted by the elastic element 32.

The kinematic chain 9 and the related articulation axes A1, A2 move integrally with the tubular element 11 carrying out a translation (toward) with respect to the tubular elements 12, 13. During this movement, the elastic element 99 returns to a discharged condition.

After having actuated the blocking element 33 taking it to the deactivation condition D, the user can simply assist the action of the elastic element 32 aligning the tubular elements 11, 12 and the tubular elements 12, 13 with one another so as to facilitate their relative movement toward one another.

This action is greatly facilitated by the presence of the kinematic chain 9 that links the tubular elements 11, 12 and the tubular elements 12, 13 to move along a plane perpendicular to the articulation axes A1, A2.

Moreover, the elastic element 99, returning to a discharged condition, further facilitates alignment between the tubular elements 12, 12, making action by the user even simpler.

When the blocking element 33 reaches the first engaging position PI, it passes from the deactivation condition D to the blocking condition B1 engaging with the tubular element 11 (automatic activation of the blocking mechanism 3), as a result of the action of the elastic element 35.

In this situation, the tubular elements 11, 12 and the tubular elements 12, 13 are rigidly coupled to one another in the assembled state A.

The articulation axes A1, A2 are respectively positioned internally to the tubular elements 12, 13.

Also in the embodiment of Figs. 25-30, the frame 1 could comprise several groups of tubular elements 11-13, several linking cables 5 and several blocking mechanisms 3 interacting with one another according to the modes described above.

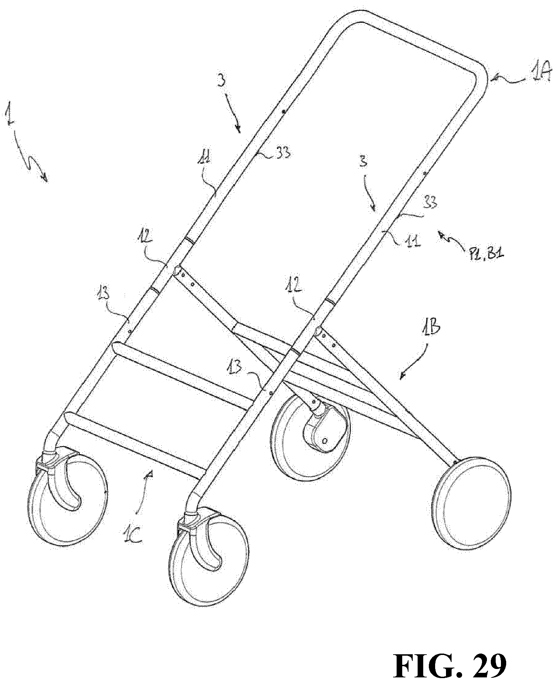

For example, in a hand pushed vehicle (stroller or trolley - Figs. 29-30), the frame 1 can comprise:
- a first group of tubular elements 11, 12, 13 consisting of a first top upright, a first bottom rear upright and a first bottom front upright linked to the "handlebar" 1A, to the linking framework 1B with the rear wheels of the vehicle and to the linking framework 1C with the front wheels of the vehicle, respectively;
- a second group of tubular elements 11, 12, 13 consisting of a second top upright, a second bottom rear upright and a second bottom front upright linked to the "handlebar" 1A, to the linking framework 1B with the rear wheels of the vehicle and to the linking framework 1C with the front wheels of the vehicle, respectively;
- a linking element 5 operatively associated with each group of tubular elements 11, 12, 13;
- a blocking mechanism 3 operatively associated with each group of tubular elements 11, 12, 13.

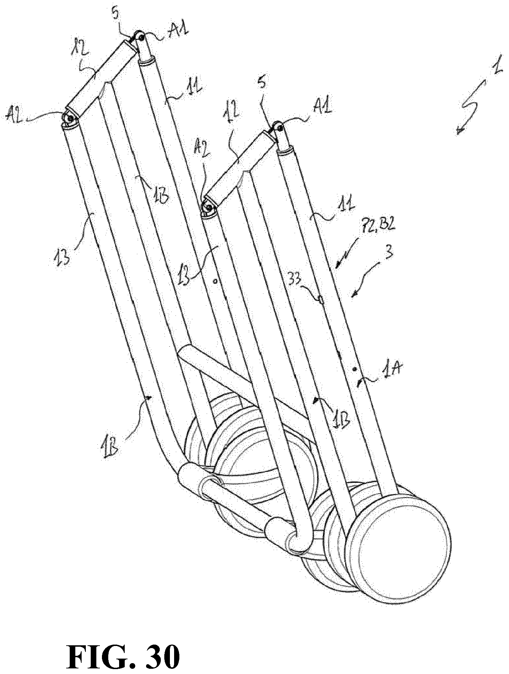

To take the frame 100 of the vehicle illustrated in Figs. 29-30, from an open condition (Fig. 29) to a closed condition (Fig. 30), and vice versa, the user can actuate the blocking element 33 of each blocking mechanism 3.

The operating modes for passage of each pair of tubular elements 11, 12, 13 from the assembled state A to the collapsed state C, and vice versa, and operation of the blocking mechanism 3 operatively associated with each group of tubular elements 11, 12, 13 correspond to those illustrated above (Figs. 25-28).

It has been found in practice that the frame according to the invention allows the intended aims and objects to be achieved.

The frame according to the invention has a particularly simple and sturdy structure.

Due to the arrangement of tubular elements mutually movable to an assembled or collapsed state, without rotatable articulation axes, the frame according to the invention, has a particularly light and compact structure.

The frame according to the invention can be maneuvered easily even by inexperienced users. The user can carry out simple and intuitive maneuvers to couple/decouple the tubular elements to/from one another.

The frame according to the invention is relatively simple and inexpensive to produce on an industrial scale.

## Claims

1. Collapsible frame (1) comprising:
- a first tubular element (11) having first and second ends (111, 112) opposite one another and a second tubular element (12) having third and fourth ends (121, 122) opposite one another,
wherein said first and second tubular elements (11, 12) are movable from an assembled state (A), in which said first and second tubular elements are rigidly coupled at said first and third ends (111, 121), to a collapsed state (C), in which said first and second tubular elements are foldable with respect to one another at said first and third ends (111, 121), or vice-versa;
- a linking element (5) having an elongated shape and fifth and sixth ends (51, 52) opposite one another,
wherein said linking element is foldable and is inextensible in length,
wherein said linking element is fixed to a first fixed link element (7) at said fifth end (51);
**characterized in that** it comprises a blocking mechanism (3) that comprises:
- a supporting base (31) positioned internally to said first tubular element (11) and movable along said first tubular element, said linking element (5) being fixed to said supporting base at said sixth end (52);
- a first elastic element (32) positioned internally to said first tubular element (11) and operatively coupled to said supporting base (31) and to a second fixed link element (34);
- a blocking element (33) positioned internally to said first tubular element (11) and operatively connected to said supporting base (31) in such a way to be movable along said first tubular element together with said supporting base;
wherein said blocking element (33) is movable in:
- a first blocking condition (B1) in which said blocking element is engaged with said first tubular element (11) at a first engaging position (P1),
wherein said first and second tubular elements (11, 12) are in said assembled state (A), when said blocking element is in said first blocking condition (B1),
wherein said first elastic element (32) is in a discharged condition, when said blocking element is in said first blocking condition (B1);
- a second blocking condition (B2) in which said blocking element is engaged with said first tubular element (11) at a second engaging position (P2),
wherein said first and second tubular elements (11, 12) are in said collapsed state (C), when said blocking element is in said second blocking condition (B2),
wherein said first elastic element (32) is in a charged condition, when said blocking element is in said second blocking condition (B2);
- a deactivation condition (D) in which said blocking element is disengaged from said first tubular element (11),
wherein said supporting base (31) is free to move along said first tubular element together with said blocking element, when said blocking element is in said deactivation condition (D),
wherein said first and second tubular elements (11, 12) are movable with respect to one another to pass from said assembled state (A) to said collapsed state (C), or vice-versa, when said blocking element is in said deactivation condition (D),
wherein said first elastic element (32) is subjected to a deformation, when said blocking element (33) is in said deactivation condition (D).

2. Collapsible frame, according to claim 1, **characterized in that**, after having passed from said first blocking condition (B1) to said deactivation condition (D), said blocking element (33) moves from said first engaging position (P1) to said second engaging position (P2) as a result of an exerted external force,
wherein said first elastic element (32) is subjected to a deformation in which elastic energy is stored, when said blocking element (33) moves from said first engaging position (P1) to said second engaging position (P2).

3. Collapsible frame, according to claims 1 or 2, **characterized in that**, after having passed from said second blocking condition (B2) to said deactivation condition (D), said blocking element (33) moves from said second engaging position (P2) to said first engaging position (P1) as a result of a force exerted by said first elastic element (32).

4. Collapsible frame, according to one or more of the previous claims, **characterized in that** said linking element (5) is a linking cable that is flexible and inextensible in length.

5. Collapsible frame, according to one or more of the previous claims, **characterized in that** said blocking element (33) is a blocking ratchet operatively connected to said supporting base (31) in such a way to be rotatably movable with respect to said supporting base to engage/disengage with/from said first tubular element (11).

6. Collapsible frame, according to one or more of the previous claims, chracterized in that it comprises first coupling means (111A, 121A) to couple said first and second tubular elements (11, 12) to one another.

7. Collapsible frame, according to one or more of the previous claims, **characterized in that** it comprises a third tubular element (13) having seventh and eighth ends (131, 132) opposite one another,
wherein said second and third tubular elements (12, 13) are movable from an assembled state (A), in which said second and third tubular elements are rigidly coupled at said fourth and seventh ends (122, 131), to a collapsed state (C), in which said second and third tubular elements are foldable with respect to one another, at said fourth and seventh ends (122, 131), or vice-versa,
wherein said second and third tubular elements (12, 13) are in said assembled state (A), when said blocking element (33) is in said first blocking condition (B1),
wherein said second and third tubular elements (12, 13) are in said collapsed state (C), when said blocking element is in said second blocking condition (B2),
wherein said second and third tubular elements (12, 13) are movable with respect to one another to pass from said assembled state (A) to said collapsed state (C), or vice-versa, when said blocking element is in said deactivation condition (D).

8. Collapsible frame, according claim 7, in that it comprises second coupling means (111A, 121A, 122A, 131A, 9) to couple said first and second tubular elements (11, 12) to one another and to couple said second and third tubular elements (12, 13) to one another.

9. Collapsible frame, according to claim 8, **characterized in that** said second coupling means comprise a coupling kinematic chain (9) passing internally to said first, second and third tubular element (11, 12, 13),
wherein said coupling kinematic chain comprises a plurality of segments (91, 92, 93) that are articulated with respect to one another at a plurality of articulation axes (A1, A2).

10. Collapsible frame, according to claim 9, **characterized in that** said coupling kinematic chain (9) comprises first, second and third segments (91, 92, 93) articulated to one another,
wherein said first segment (91) is fixed to said first tubular element (11) and is slidingly couplable with said second tubular element (12),
wherein said second segment (92) is slidingly coupled with said second tubular element (12) and is slidingly couplable with said third tubular element (13),
wherein said third segment (93) is slidingly coupled with said third tubular element (13), wherein said first and second segments (91, 92) are articulated to one another at a first articulation axis (A1),
wherein said second and third segments (92, 93) are articulated to one another at a second articulation axis (A2).

11. Collapsible frame, according to claim 10, **characterized in that** said second segment (92) comprises first and second portions (921, 922),
wherein the first portion (921) of said second segment is operatively connected to said first segment (91) at said first articulation axis (A1),
wherein the second portion (922) of said second segment is operatively connected to said third segment (93) at said second articulation axis (A2),
wherein the first and second portions (921, 922) of said second segment (92) are operatively connected to one another by a third elastic element (99) of said coupling kinematic chain (9).

12. Collapsible frame, according to one or more of the previous claims, **characterized in that** said linking element (5) is arranged so as to pass internally to said first and second tubular elements (11, 12).

13. Collapsible frame, according to one of the claims from 7 to 12, **characterized in that** said linking element (5) is arranged so as to pass internally to said first, second and third tubular elements (11, 12, 13).

14. A vehicle **characterised in that** it comprises a collapsible frame, according to one or more of the previous claims.

15. A furnishing item **characterised in that** it comprises a collapsible frame, according to one or more of the claims 1-13.

## Patentansprüche

1. Faltbarer Rahmen (1), umfassend:
- ein erstes rohrförmiges Element (11), das erste und zweite einander gegenüberliegende Enden (111, 112) aufweist, und ein zweites rohrförmiges Element (12), das dritte und vierte einander gegenüberliegende Enden (121, 122) aufweist,
wobei das erste und das zweite rohrförmige Element (11, 12) aus einem montierten Zustand (A), in dem das erste und das zweite rohrförmige Element starr an dem ersten und dem dritten Ende (111, 121) gekoppelt sind, in einen gefalteten Zustand (C) beweglich sind, in dem das erste und das zweite rohrförmige Element im Verhältnis zueinander an dem ersten und dritten Ende (111, 121) oder umgekehrt faltbar sind;
- ein verbindendes Element (5), das eine längliche Form und fünfte und sechste einander gegenüberliegende Enden (51, 52) aufweist,
wobei das verbindende Element faltbar ist und in der Länge nicht ausdehnbar ist, wobei das verbindende Element an einem ersten befestigten Verbindungselement (7) an dem fünften Ende (51) befestigt ist;
**dadurch gekennzeichnet, dass** es einen sperrenden Mechanismus (3) umfasst, der umfasst:
- eine tragende Basis (31), die intern zu dem ersten rohrförmigen Element (11) positioniert ist und entlang des ersten rohrförmigen Elements beweglich ist, wobei das verbindende Element (5) an der tragenden Basis an dem sechsten Ende (52) befestigt ist;
- ein erstes elastisches Element (32), das intern zu dem ersten rohrförmigen Element (11) positioniert ist und betriebsmäßig mit der tragenden Basis (31) und mit einem zweiten befestigten Verbindungselement (34) gekoppelt ist;
- ein sperrendes Element (33), das intern zu dem ersten rohrförmigen Element (11) positioniert ist und betriebsmäßig mit der tragenden Basis (31) so verbunden ist, dass es entlang des ersten rohrförmigen Elements zusammen mit der tragenden Basis beweglich ist;
wobei das sperrende Element (33) beweglich ist in:
- eine erste sperrende Konstellation (B1), in der das sperrende Element in das erste rohrförmige Element (11) an einer ersten einklinkenden Position (P1) einklinkt, wobei sich das erste und das zweite rohrförmige Elemente (11, 12) in dem montierten Zustand (A) befinden, wenn sich das sperrende Element in der ersten sperrenden Konstellation (B1) befindet,
wobei sich das erste elastische Element (32) in einer entlasteten Konstellation befindet, wenn sich das sperrende Element in der ersten sperrenden Konstellation (B1) befindet;
- eine zweite sperrende Konstellation (B2), in der das sperrende Element in das erste rohrförmige Element (11) an einer zweiten einklinkenden Position (P2) einklinkt,
wobei sich das erste und das zweite rohrförmige Elemente (11, 12) in dem gefalteten Zustand (C) befinden, wenn sich das sperrende Element in der zweiten sperrenden Konstellation (B2) befindet,
wobei sich das erste elastische Element (32) in einer belasteten Konstellation befindet, wenn sich das sperrende Element in der zweiten sperrenden Konstellation (B2) befindet;
- eine Deaktivierungskonstellation (D), in der das sperrende Element aus dem ersten rohrförmigen Element (11) ausgeklinkt ist,
wobei die tragende Basis (31) frei ist, um sich entlang des ersten rohrförmigen Elements zusammen mit dem sperrenden Element zu bewegen, wenn sich das sperrende Element in der Deaktivierungskonstellation (D) befindet,
wobei das erste und das zweite rohrförmige Element (11, 12) im Verhältnis zueinander beweglich sind, um von dem montierten Zustand (A) in den gefalteten Zustand (C) oder umgekehrt überzugehen, wenn sich das sperrende Element in der Deaktivierungskonstellation (D) befindet,
wobei das erste elastische Element (32) einer Verformung unterzogen wird, wenn sich das sperrende Element (33) in der Deaktivierungskonstellation (D) befindet.

2. Faltbarer Rahmen nach Anspruch 1, **dadurch gekennzeichnet, dass** nach erfolgtem Übergehen von der ersten sperrenden Konstellation (B1) in die Deaktivierungskonstellation (D) sich das sperrende Element (33) als Folge einer ausgeübten externen Kraft von der ersten einklinkenden Position (P1) in die zweite einklinkende Position (P2) bewegt,
wobei das erste elastische Element (32) einer Verformung unterzogen wird, bei der elastische Energie gespeichert wird, wenn sich das sperrende Element (33) von der ersten einklinkenden Position (P1) in die zweite einklinkende Position (P2) bewegt.

3. Faltbarer Rahmen nach Anspruch 1 oder 2, **dadurch gekennzeichnet, dass** nach erfolgtem Übergehen von der zweiten sperrenden Konstellation (B2) in die Deaktivierungskonstellation (D) sich das sperrende Element (33) als Folge einer von dem ersten elastischen Element (32) ausgeübten Kraft von der zweiten einklinkenden Position (P2) in die erste einklinkende Position (P1) bewegt.

4. Faltbarer Rahmen nach einem oder mehreren der vorstehenden Ansprüche, **dadurch gekennzeichnet, dass** das verbindende Element (5) ein verbindendes Kabel ist, das flexible und in der Länge nicht ausdehnbar ist.

5. Faltbarer Rahmen nach einem oder mehreren der vorstehenden Ansprüche, **dadurch gekennzeichnet, dass** das sperrende Element (33) eine sperrende Sperrklinke ist, die betriebsmäßig mit der tragenden Basis (31) so verbunden ist, dass sie im Verhältnis zu der tragenden Basis drehbar beweglich ist, um in das erste rohrförmige Element (11) einzuklinken/daraus auszuklinken.

6. Faltbarer Rahmen nach einem oder mehreren der vorstehenden Ansprüche, **dadurch gekennzeichnet, dass** er erste Kopplungsmittel (111A, 121A) umfasst, um das erste und das zweite rohrförmige Element (11, 12) untereinander zu koppeln.

7. Faltbarer Rahmen nach einem oder mehreren der vorstehenden Ansprüche, **dadurch gekennzeichnet, dass** er ein drittes rohrförmiges Element (13) umfasst, das siebte und achte einander gegenüberliegende Enden (131, 132) aufweist,
wobei das zweite und das dritte rohrförmige Element (12, 13) von einem montierten Zustand (A), in dem das zweite und das dritte rohrförmige Element starr mit dem vierten und siebten Enden (122, 131) gekoppelt sind, in einen gefalteten Zustand (C) beweglich sind, in dem das zweite und das dritte rohrförmige Element im Verhältnis zueinander an dem vierten und siebten Ende (122, 131) oder umgekehrt faltbar sind, wobei das zweite und das dritte rohrförmige Element (12, 13) sich in dem montierten Zustand (A) befinden, wenn sich das sperrende Element (33) in der ersten sperrenden Konstellation (B1) befindet,
wobei sich das zweite und das dritte rohrförmige Element (12, 13) in dem gefalteten Zustand (C) befinden, wenn sich das sperrende Element in der zweiten sperrenden Konstellation (B2) befindet,
wobei das zweite und das dritte rohrförmige Element (12, 13) im Verhältnis zueinander beweglich sind, um von dem montierten Zustand (A) in den gefalteten Zustand (C) oder umgekehrt überzugehen, wenn sich das sperrende Element in der Deaktivierungskonstellation (D) befindet.

8. Faltbarer Rahmen nach Anspruch 7, dadurch, dass er zweite Kopplungsmittel (111A, 121A, 122A, 131A, 9) umfasst, um das erste und das zweite rohrförmige Element (11, 12) aneinander zu koppeln und das zweite und das dritte rohrförmige Element (12, 13) aneinander zu koppeln.

9. Faltbarer Rahmen nach Anspruch 8, **dadurch gekennzeichnet, dass** die zweiten Kopplungsmittel eine koppelnde kinematische Kette (9) umfassen, die intern zu dem ersten, zweiten und dritten rohrförmigen Element (11, 12, 13) übergeht,
wobei die koppelnde kinematische Kette eine Vielzahl von Segmenten (91, 92, 93) umfasst, die im Verhältnis untereinander an einer Vielzahl von Artikulierungsachsen (A1, A2) artikuliert sind.

10. Faltbarer Rahmen nach Anspruch 9, **dadurch gekennzeichnet, dass** die koppelnde kinematische Kette (9) erste, zweite und dritte untereinander artikulierte Segmente (91, 92, 93) umfasst,
wobei das erste Segment (91) an dem ersten rohrförmigen Element (11) befestigt und gleitend an dem zweiten rohrförmigen Element (12) koppelbar ist,
wobei das zweite Segment (92) gleitend an dem zweiten rohrförmigen Element (12) gekoppelt ist und gleitend an dem dritten rohrförmigen Element (13) koppelbar ist, wobei das dritte Segment (93) gleitend an dem dritten rohrförmigen Element (13) gekoppelt ist,
wobei das erste und das zweite Segment (91, 92) untereinander an einer ersten Artikulierungsachse (A1) artikuliert sind,
wobei das zweite und das dritte Segment (92, 93) untereinander an einer zweiten Artikulierungsachse (A2) artikuliert sind.

11. Faltbarer Rahmen nach Anspruch 10, **dadurch gekennzeichnet, dass** das zweite Segment (92) erste und zweite Abschnitte (921, 922) umfasst,
wobei der erste Abschnitt (921) des zweiten Segments betriebsmäßig mit dem ersten Segment (91) an der ersten Artikulierungsachse (A1) verbunden ist,
wobei der zweite Abschnitt (922) des zweiten Segments betriebsmäßig mit dem dritten Segment (93) an der zweiten Artikulierungsachse (A2) verbunden ist,
wobei der erste und der zweite Abschnitt (921, 922) des zweiten Segments (92) betriebsmäßig untereinander durch ein drittes elastisches Element (99) der koppelnden kinematischen Kette (9) verbunden sind.

12. Faltbarer Rahmen nach einem oder mehreren der vorstehenden Ansprüche, **dadurch gekennzeichnet, dass** das verbindende Element (5) so angeordnet ist, dass es intern zu dem ersten und dem zweiten rohrförmigen Element (11, 12) übergeht.

13. Faltbarer Rahmen nach einem der Ansprüche von 7 bis 12, **dadurch gekennzeichnet, dass** das verbindende Element (5) so angeordnet ist, dass es intern zu dem ersten, zweiten und dritten rohrförmigen Element (11, 12, 13) übergeht.

14. Fahrzeug, **dadurch gekennzeichnet, dass** es einen faltbaren Rahmen nach einem oder mehreren der vorstehenden Ansprüche umfasst.

15. Möbelstück, **dadurch gekennzeichnet, dass** es einen faltbaren Rahmen nach einem oder mehreren der Ansprüche 1-13 umfasst.

## Revendications

1. Châssis repliable (1) comprenant :
- un premier élément tubulaire (11) ayant des première et deuxième extrémités (111, 112) opposées l'une à l'autre et un deuxième élément tubulaire (12) ayant des troisième et quatrième extrémités (121, 122) opposées l'une à l'autre,
dans lequel lesdits premier et deuxième éléments tubulaires (11, 12) sont mobiles d'un état assemblé (A), dans lequel lesdits premier et deuxième éléments tubulaires sont couplés rigidement au niveau desdites première et troisième extrémités (111, 121), à un état replié (C), dans lequel lesdits premier et deuxième éléments tubulaires sont pliables l'un par rapport à l'autre au niveau desdites première et troisième extrémités (111, 121), ou inversement;
- un élément de liaison (5) ayant une forme allongée et des cinquième et sixième extrémités (51, 52) opposées l'une à l'autre,
dans lequel ledit élément de liaison est pliable et est inextensible en longueur,
dans lequel ledit élément de liaison est fixé à un premier élément de liaison fixe (7) au niveau de ladite cinquième extrémité (51);
**caractérisé en ce qu'**il comprend un mécanisme de blocage (3) qui comprend:
- une base de support (31) positionnée à l'intérieur dudit premier élément tubulaire (11) et mobile le long dudit premier élément tubulaire, ledit élément de liaison (5) étant fixé à ladite base de support au niveau de ladite sixième extrémité (52);
- un premier élément élastique (32) positionné à l'intérieur dudit premier élément tubulaire (11) et couplé fonctionnellement à ladite base de support (31) et à un deuxième élément de liaison fixe (34);
- un élément de blocage (33) positionné à l'intérieur dudit premier élément tubulaire (11) et relié fonctionnellement à ladite base de support (31) de façon à être mobile le long dudit premier élément tubulaire conjointement avec ladite base de support;
dans lequel ledit élément de blocage (33) est mobile dans:
- un premier état de blocage (B1) dans lequel ledit élément de blocage est en prise avec ledit premier élément tubulaire (11) au niveau d'une première position de mise en prise (P1),
dans lequel lesdits premier et deuxième éléments tubulaires (11, 12) sont dans ledit état assemblé (A), lorsque ledit élément de blocage est dans ledit premier état de blocage (B1),
dans lequel ledit premier élément élastique (32) est dans un état déchargé, lorsque ledit élément de blocage est dans ledit premier état de blocage (B1);
- un deuxième état de blocage (B2) dans lequel ledit élément de blocage est en prise avec ledit premier élément tubulaire (11) au niveau d'une deuxième position de mise en prise (P2),
dans lequel lesdits premier et deuxième éléments tubulaires (11, 12) sont dans ledit état replié (C), lorsque ledit élément de blocage est dans ledit deuxième état de blocage (B2),
dans lequel ledit premier élément élastique (32) est dans un état chargé, lorsque ledit élément de blocage est dans ledit deuxième état de blocage (B2) ;
- un état de désactivation (D) dans lequel ledit élément de blocage est hors prise dudit premier élément tubulaire (11),
dans lequel ladite base de support (31) est libre de se déplacer le long dudit premier élément tubulaire conjointement avec ledit élément de blocage, lorsque ledit élément de blocage est dans ledit état de désactivation (D),
dans lequel lesdits premier et deuxième éléments tubulaires (11, 12) sont mobiles l'un par rapport à l'autre pour passer dudit état assemblé (A) audit état replié (C), ou inversement, lorsque ledit élément de blocage est dans ledit état de désactivation (D),
dans lequel ledit premier élément élastique (32) est soumis à une déformation, lorsque ledit élément de blocage (33) est dans ledit état de désactivation (D).

2. Châssis repliable, selon la revendication 1, **caractérisé en ce que**, après être passé dudit premier état de blocage (B1) audit état de désactivation (D), ledit élément de blocage (33) se déplace de ladite première position de mise en prise (P1) à ladite deuxième position de mise en prise (P2) suite à une force externe exercée,
dans lequel ledit premier élément élastique (32) est soumis à une déformation dans laquelle de l'énergie élastique est stockée, lorsque ledit élément de blocage (33) se déplace de ladite première position de mise en prise (P1) à ladite deuxième position de mise en prise (P2).

3. Châssis repliable, selon les revendications 1 ou 2, **caractérisé en ce que**, après être passé dudit deuxième état de blocage (B2) audit état de désactivation (D), ledit élément de blocage (33) se déplace de ladite deuxième position de mise en prise (P2) à ladite première position de mise en prise (P1) suite à une force exercée par ledit premier élément élastique (32).

4. Châssis repliable, selon une ou plusieurs des revendications précédentes, **caractérisé en ce que** ledit élément de liaison (5) est un câble de liaison qui est flexible et inextensible en longueur.

5. Châssis repliable, selon une ou plusieurs des revendications précédentes, **caractérisé en ce que** ledit élément de blocage (33) est un cliquet de blocage relié fonctionnellement à ladite base de support (31) de façon à être mobile en rotation par rapport à ladite base de support pour se mettre en prise/hors prise avec/dudit premier élément tubulaire (11).

6. Châssis repliable, selon une ou plusieurs des revendications précédentes, **caractérisé en ce qu'**il comprend des premiers moyens de couplage (111A, 121A) pour coupler lesdits premier et deuxième éléments tubulaires (11, 12) l'un à l'autre.

7. Châssis repliable, selon une ou plusieurs des revendications précédentes, **caractérisé en ce qu'**il comprend un troisième élément tubulaire (13) ayant des septième et huitième extrémités (131, 132) opposées l'une à l'autre.
dans lequel lesdits deuxième et troisième éléments tubulaires (12, 13) sont mobiles d'un état assemblé (A), dans lequel lesdits deuxième et troisième éléments tubulaires sont couplés rigidement au niveau desdites quatrième et septième extrémités (122, 131), à un état replié (C), dans lequel lesdits deuxième et troisième éléments tubulaires sont pliables l'un par rapport à l'autre, au niveau desdites quatrième et septième extrémités (122, 131), ou inversement,
dans lequel lesdits deuxième et troisième éléments tubulaires (12, 13) sont dans ledit état assemblé (A), lorsque ledit élément de blocage (33) est dans ledit premier état de blocage (B1),
dans lequel lesdits deuxième et troisième éléments tubulaires (12, 13) sont dans ledit état replié (C), lorsque ledit élément de blocage est dans ledit deuxième état de blocage (B2),
dans lequel lesdits deuxième et troisième éléments tubulaires (12, 13) sont mobiles l'un par rapport à l'autre pour passer dudit état assemblé (A) audit état replié (C), ou inversement, lorsque ledit élément de blocage est dans ledit état de désactivation (D).

8. Châssis repliable, selon la revendication 7, en ce qu'il comprend des deuxième moyens de couplage (111A, 121A, 122A, 131A, 9) pour coupler lesdits premier et deuxième éléments tubulaires (11, 12) l'un à l'autre et pour coupler lesdits deuxième et troisième éléments tubulaires (12, 13) l'un à l'autre.

9. Châssis repliable, selon la revendication 8, **caractérisé en ce que** lesdits deuxièmes moyens de couplage comprennent une chaîne cinématique de couplage (9) passant en interne audit premier, deuxième et troisième élément tubulaire (11, 12, 13),
dans lequel ladite chaîne cinématique de couplage comprend une pluralité de segments (91, 92, 93) qui sont articulés l'un par rapport à l'autre au niveau d'une pluralité d'axes d'articulation (A1, A2).

10. Châssis repliable, selon la revendication 9, **caractérisé en ce que** ladite chaîne cinématique de couplage (9) comprend des premier, deuxième et troisième segments (91, 92, 93) articulés l'un à l'autre,
dans lequel ledit premier segment (91) est fixé audit premier élément tubulaire (11) et est couplable de manière coulissante audit deuxième élément tubulaire (12),
dans lequel ledit deuxième segment (92) est couplé de manière coulissante audit deuxième élément tubulaire (12) et est couplable de manière coulissante audit troisième élément tubulaire (13),
dans lequel ledit troisième segment (93) est couplé de manière coulissante audit troisième élément tubulaire (13),
dans lequel lesdits premier et deuxième segments (91, 92) sont articulés l'un à l'autre au niveau d'un premier axe d'articulation (A1),
dans lequel lesdits deuxième et troisième segments (92, 93) sont articulés l'un à l'autre au niveau d'un deuxième axe d'articulation (A2).

11. Châssis repliable, selon la revendication 10, **caractérisé en ce que** ledit deuxième segment (92) comprend des première et deuxième portions (921, 922),
dans lequel la première portion (921) dudit deuxième segment est reliée fonctionnellement audit premier segment (91) au niveau dudit premier axe d'articulation (A1),
dans lequel la deuxième portion (922) dudit deuxième segment est reliée fonctionnellement audit troisième segment (93) au niveau dudit deuxième axe d'articulation (A2),
dans lequel les première et deuxième portions (921, 922) dudit deuxième segment (92) sont reliées fonctionnellement l'une à l'autre par un troisième élément élastique (99) de ladite chaîne cinématique de couplage (9).

12. Châssis repliable, selon une ou plusieurs des revendications précédentes, **caractérisé en ce que** ledit élément de liaison (5) est agencé de façon à passer en interne auxdits premier et deuxième éléments tubulaires (11, 12).

13. Châssis repliable, selon une des revendications de 7 à 12, **caractérisé en ce que** ledit élément de liaison (5) est agencé de façon à passer en interne auxdits premier, deuxième et troisième éléments tubulaires (11, 12, 13).

14. Véhicule **caractérisé en ce qu'**il comprend un châssis repliable, selon une ou plusieurs des revendications précédentes.

15. Objet d'ameublement **caractérisé en ce qu'**il comprend un châssis repliable, selon une ou plusieurs des revendications 1-13.
